(19) Europäisches Patentamt / European Patent Office / Office européen des brevets

(11) **EP 4 101 530 A1**

(12) **EUROPÄISCHE PATENTANMELDUNG**

(43) Veröffentlichungstag:
**14.12.2022 Patentblatt 2022/50**

(21) Anmeldenummer: **21178671.0**

(22) Anmeldetag: **10.06.2021**

(51) Internationale Patentklassifikation (IPC):
**B01J 19/00** (2006.01)     **B01J 19/18** (2006.01)
**C08F 2/01** (2006.01)     **C08F 2/32** (2006.01)
**C08F 2/00** (2006.01)     **C08F 2/18** (2006.01)
**C08F 2/30** (2006.01)     **C08F 4/30** (2006.01)
**C08F 120/06** (2006.01)

(52) Gemeinsame Patentklassifikation (CPC):
**B01J 19/0093; B01J 19/18; C08F 2/001;
C08F 2/01; C08F 2/18; C08F 2/30; C08F 2/32;
C08F 4/30; C08F 120/06;** B01J 2219/00792;
B01J 2219/00822; B01J 2219/0086;
B01J 2219/00873; B01J 2219/00889;
B01J 2219/00898

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **Evonik Operations GmbH**
**45128 Essen (DE)**

(72) Erfinder:
• **BAILEY, David**
  **48653 Coesfeld (DE)**
• **LÖB, Patrick**
  **55129 Mainz (DE)**

• **VON BOMHARD, Sibylle**
  **55129 Mainz (DE)**
• **SCHERER, Rabea**
  **55129 Mainz (DE)**
• **MUSYANOVYCH, Anna**
  **55129 Mainz (DE)**
• **NAGEL, Manfred**
  **48734 Reken (DE)**

(74) Vertreter: **Evonik Patent Association**
**c/o Evonik Industries AG**
**IP Management**
**Bau 1042A/PB 15**
**Paul-Baumann-Straße 1**
**45772 Marl (DE)**

(54) **SEMI-KONTINUIERLICHE SUSPENSIONSPOLYMERISATION VON POLYACRYLATEN IM KAPILLARREAKTOR**

(57)     Die Erfindung betrifft ein Verfahren zur Herstellung von Polyacrylatpartikeln im Wege der Suspensionspolymerisation und anschließender Agglomeration. Ihr lag die Aufgabe zu Grunde, ein Verfahren zur Herstellung von Polyacrylatpartikel mit definierter Gestalt und Größe anzugeben, welches ein verbessertes Wärmemanagement ermöglicht und mit einer möglichst geringen Menge an organischen Substanzen auskommt. Mechanische Arbeitsschritte zum Herstellen von Gestalt und Größe der Partikel - insbesondere Mahlen und Sieben - sollen vermieden werden, um möglichst wenig Unterkorn zu produzieren. Schließlich soll es möglich sein, dass Verfahren im industriellen Maßstab wirtschaftlich zu betrieben. Ein wesentlicher Aspekt des erfindungsgemäßen Verfahrens ist, dass die Schritte Polymerisation und Agglomeration in getrennten Apparaten durchgeführt werden, nämlich die Suspensionspolymerisation in einem kontinuierlich betriebenen Kapillarreaktor und die Agglomeration in einem Batch-Reaktor. Die Verwendung mikrostrukturierter Apparate ist ein weiterer wesentlicher Aspekt der Erfindung.

Fig. 1

**Beschreibung**

Die Erfindung betrifft ein Verfahren zur Herstellung von Polyacrylatpartikeln im Wege der Suspensionspolymerisation und anschließender Agglomeration.

Der Begriff der Suspensionspolymerisation wird in der Literatur und im technischen Sprachgebrauch nicht einheitlich verwendet. Deswegen ist hier zunächst eine sorgfältige Begriffsdefinition erforderlich.

Sofern hier von Suspensionspolymerisation die Rede ist, ist damit ein Prozess gemeint, bei dem Tropfen eines Monomers oder einer Monomer-Lösung in einer kontinuierlichen Phase polymerisiert werden, wobei die kontinuierliche Phase sowohl das Monomer, als auch das gebildete Polymer nicht löst.

Der hier verwendete Begriff der Suspensionspolymerisation entspricht daher der Definition von "suspension polymerization" in

Slomkowski, S., Alemán, J., Gilbert, R., et al. (2011). Terminology of polymers and polymerization processes in dispersed systems (IUPAC Recommendations 2011). Pure and Applied Chemistry, 83(12), pp. 2229-2259. doi:10.1351/PAC-REC-10-06-03.

Am Ende eines solchen Prozesses sind die entstandenen Polymere als Festkörper in der flüssigen kontinuierlichen Phase suspendiert. Am Anfang des Prozesses liegt das Monomer bzw. die Monomer-Lösung in der Form von Tropfen innerhalb der kontinuierlichen Phase vor, was impliziert, dass das Monomer bzw. die Monomer-Lösung flüssig ist. Feinverteilte Tropfen in einer kontinuierlichen flüssigen Phase werden allgemein als Emulsion bezeichnet. Das ist der Grund, warum die hier besprochenen Prozesse auch manchmal als "Emulsions-Polymerisation" bezeichnet werden. Der Begriff der "emulsion polymerization" ist aber nach Definition von Slomkowski, S., Alemán, J., Gilbert, R., et al. auf Systeme im kolloidalen Maßstab beschränkt. Die hier besprochene Erfindung findet jedoch nicht notwendigerweise in einem Kolloid-System statt. Auch verwenden manche Techniker den Begriff der Emulsions-Polymerisation gezielt für wässrige Systeme. Die Erfindung funktioniert aber auch im organischen Milieu. Aus all diesen Gründen ist der Begriff Emulsionspolymerisation für die vorliegende Erfindung unangemessen. Es wird hier ausschließlich von Suspensions-Polymerisation in Sinne von Slomkowski, S., Alemán, J., Gilbert, R., et al. gesprochen. Sofern das Monomer in einer wässriger Phase vorliegt, welche in einem organischen Dispersionsmittel feinverteilt ist, kann der Prozess auch als "inverse suspension polymerization" bezeichnet werden.

Um nicht unnötigerweise Verwirrung zu stiften, wird fortan der Begriff der Emulsion gänzlich vermieden. Stattdessen wird der Begriff der Dispersion verwendet, wenn es gilt, das erfindungsgemäße Reaktionssystem zu beschreiben. Dispersionen beschreiben Gemische, bei denen flüssige Tropfen und/oder feste Partikel in einer kontinuierlichen flüssigen Phase feinverteilt sind; vgl.

Heusch, R. and Reizlein, K. (2000). Disperse Systems and Dispersants in Ullmann's Encyclopedia of Industrial Chemistry, (Ed.). doi:10.1002/14356007.a08_577.

Der Begriff der Dispersion bezeichnet daher das Reaktionsgemisch vor, während und nach der Polymerisation.

Da die Monomer-Tropfen vor der Polymerisation aufgrund der Oberflächenspannung im Wesentlichen kugelförmig sind, sind die Polymer-Partikel unmittelbar nach der Polymerisation auch im Wesentlichen kugelförmig. Der Durchmesser der Polymerpartikel entspricht dabei im Wesentlichen dem Durchmesser der Tropfen. Die Größe der Polymerpartikel lässt sich dadurch durch die Größe der Tropfen des Monomeres steuern.

Es ist allerdings zu beachten, dass unmittelbar nach Beginn der Polymerisation die entstehenden und frisch entstandenen Polymerpartikel beginnen, sich innerhalb der Dispersion zu größeren Agglomeraten zusammenschließen. Dieser Prozess wird Agglomeration genannt. Makroskopisch gesehen sind die Agglomerate wiederum Partikel, die jedoch nicht notwendigerweise kugelförmig sind. Vielmehr haben die Agglomerate häufig die Gestalt einer Brombeere, also ein regelmäßig geformter, eher runder, aber nicht kugelförmiger Körper, der sich aus vielen kleineren Kugeln zusammensetzt. Agglomerate können aber auch unregelmäßig geformt sein.

Da die Agglomerate mit der Zeit weiter anwachsen, hat die Steuerung der Agglomeration einen großen Einfluss auf die Größer der letztendlich erhaltenen Polymerpartikel.

Um hier zwischen den eher kugelförmigen, kleinen Partikeln und den meist brombeerförmigen, größeren Agglomeraten zu unterscheiden, wird im Rahmen dieser Erfindung von "Primärpartikeln" und "Sekundärpartikeln" gesprochen. Primärpartikel sind die Polymere, die unmittelbar aus der Polymerisation der Monomertropfen entstanden sind, wobei der Begriff Sekundärpartikel die Agglomerate bezeichnet, die durch Zusammenschluss der Primärpartikel entstehen.

In technischen Prozessen laufen Polymerisation und Agglomeration nicht als streng getrennte, sukzessive Schritte, sondern auch zeitgleich ab. Die Dispersion enthält am Ende des Prozesses daher noch nicht agglomerierte, frische Primärpartikel und Sekundärpartikel, die sich aus älteren Primärpartikeln zusammensetzen. Die Größenverteilung und die Morphologie der durch das Verfahren erhaltenen Polymerpartikel hängt daher von der Verfahrensführung sowohl in der Polymerisation als auch in der Agglomeration ab.

Der technologische Vorteil einer Suspensionspolymerisation mit anschließender Agglomeration gegenüber anderen Polymerisationsverfahren besteht darin, dass sich die Morphologie und die Partikelgrößenverteilung der erhaltenen Polymerpartikel recht genau einstellen lassen - und zwar mit Hilfe von Mitteln der chemischen Verfahrenstechnik. Eine mechanische Nachbearbeitung der Polymere mit Mitteln der Partikeltechnologie kann in einigen Anwendungsfällen entfallen. Idealerweise können die Partikel bereits in einsatzfähiger Gestalt und Größe aus der Suspension entnommen werden.

Die Herstellung von Polymerpartikel im Wege der Suspensionspolymerisation mit anschließender Agglomeration ist deswegen dann von besonderem Interesse, wenn die Polymerpartikel eine festgelegte Morphologie und Größenverteilung aufweisen sollen.

Ein industriell relevantes Beispiel, bei dem die Morphologie und Größenverteilung von Polymerpartikel bedeutsam ist, ist die Herstellung von Superabsorbern.

"Superabsorber" ist ein auf dem Gebiet der Hygieneartikel gängiger Begriff, der zur Bezeichnung von wasserabsorbierenden Polymerpartikel verwendet wird. Superabsorber basieren in der industriellen Praxis meist auf Polyacrylat bzw. Natriumacrylat. Sie haben die Fähigkeit, große Mengen an Wasser oder wasserbasierten Flüssigkeiten aufzunehmen und diese in einem Hydrogel zu binden. Superabsorber werden in persönlichen Einweg-Hygieneartikel wie Windeln, Damenhygiene und Inkontinenzprodukten eingebaut, wo sie ausgeschiedene Körperflüssigkeiten absorbieren und so in dem Artikel fixieren. Da Hydrogele anders als ein Schwamm kaum ausgedrückt werden können, verbleibt die absorbierte Körperflüssigkeit auch unter mechanischem Druck in dem Hygieneartikel.

Eine Einführung in die Welt der wasserabsorbierenden Polymerpartikel bietet:
Markus Frank: Superabsorbents. Ullmann's Encyclopedia of Industrial Chemistry. Published Online: 15 JAN 2003 DOI: 10.1002/14356007.f25_f01.

Die Herstellung von Superabsorbern erfolgt in der industriellen Praxis meist wie folgt:
Eine Monomerlösung wird bereitgestellt. Diese enthält zumindest ein Monomer, einen Vernetzer, fast immer Wasser und weitere Hilfsstoffe. Als Monomer werden meist ethylenisch ungesättigte Substanzen eingesetzt, in der Regel Acrylsäure. Die Acrylsäure kann auch teilweise neutralisiert sein, etwas mit Natronlauge. Entsprechend handelt es sich bei dem aus mit Natronlauge neutralisiertem Polyacrylat genauer gesagt um ein Natriumacrylat. Es können auch Comonomere enthalten sein.

Sodann wird die Polymerisation der Monomerlösung initiiert. Im Zuge der Reaktion werden aus den Monomeren Polymer-Ketten gebildet, welche durch den Vernetzer zu einem Polymernetzwerk quervernetzt werden. Das in der Monomerlösung enthaltene Wasser wird in das Polymernetzwerk eingeschlossen, wodurch ein Hydrogel entsteht.

Das Hydrogel wird grob zerkleinert und getrocknet, sodass das Wasser aus dem Netzwerk ausgetrieben wird. Es entsteht trockenes, festes Polymermaterial.

Dieses wird sodann durch Mahlen und Sieben auf die gewünschte Korngröße gebracht. Die Korngröße hängt vom Einsatzzweck ab. In Hygieneartikel werden meist pulverförmige Superabsorber mit einer Korngröße von etwa 300 $\mu$m bis 800 $\mu$m eingebaut.

Abschließend werden die Partikel an ihrer Oberfläche einer Nachvernetzung unterzogen. Dabei bilden sie eine Kern-Schale-Struktur aus, welche das Aufnahmeverhalten der Partikel stark beeinflusst. Ggf. werden weitere Zusatzstoffe beigeschlagen, um die gewünschte Performance gezielt einzustellen.

Wie bereits erwähnt, ist die Gestalt und die Größe der Partikel für die Gebrauchsfähigkeit der Superabsorber sehr bedeutsam: So weisen unregelmäßig geformte Partikel eine größere spezifische Oberfläche auf als kugelförmige Partikel. Da eine große Oberfläche die Wasseraufnahme begünstigt, zeigen unregelmäßig geformte Superabsorber tendenziell eine schnellere Wasseraufnahme als kugelige. Kleine Superabsorberpartikel weisen bei großer spezifischer Oberfläche gleichzeitig eine geringe Aufnahmekapazität auf. Deshalb bilden diese auch schneller ein Hydrogel aus als größere wasserabsorbierende Polymerpartikel. Zu einem besonders nachteiligem Phänomen kommt es, wenn ein Superabsorber-Pulver sowohl kleine als auch großer Körner enthält: In einer Windel etwa führt dies dazu, dass nach einer schwallartigen Beladung der Superabsorber-Schüttung die kleinen Körner zuerst aufquellen und dadurch die Durchlässigkeit der gesamten Schüttung beeinträchtigen. Dies hat zur Folge, dass die größeren Körner der Schüttung gar nicht mehr von der Körperflüssigkeit erreicht werden und der Hygieneartikel insgesamt versagt. Dieses gefürchtete Phänomen wird "gel blocking effect" genannt. Eine Maßnahme, um gel blocking zu vermeiden, ist eine möglichst enge Partikelgrößenverteilung anzustreben. Dies deutet, dass die einzelnen Körner des Pulvers statistisch möglichst gleich groß sind und so einen weitestgehend gleiche Quellgeschwindigkeit aufweisen.

Um Gestalt und Größe der Superabsorber bestmöglich einzustellen werden bei herkömmlichen Herstellungsprozessen in der Regel die Arbeitsschritte "Mahlen" und "Sieben" optimiert - eben weil diese Arbeitsschritte die Gestalt und Größe der Superabsorber maßgeblich bestimmen. Ein Nachteil des Mahlen und Siebens ist, dass dabei immer Unterkorn anfällt, also wasserabsorbierende Partikel, die kleiner sind als gewünscht. Diese "Fines" müssen in dem Prozess aufwändig wiederverwertet werden. Insbesondere dann, wenn die rezyklierten Fines die Produktqualität nicht beeinträchtigen dürfen, erfordert dies einen großen verfahrenstechnischen Aufwand. Um die Superabsorber im industriellen Maßstab wirtschaftlich herstellen zu können, ist daher der Anfall von Fines tunlichst zu vermeiden.

Ein technologisch völlig anderer Ansatz zur Vermeidung von Fines besteht darin, Superabsorber direkt in gebrauchsfertiger Größe und Gestalt zu polymerisieren, sodass die mechanischen Arbeitsschritte "Mahlen" und "Sieben" entfallen können.

Dies ermöglicht eine Suspensionspolymerisation mit anschließender Agglomeration.

Aus der WO 2016/087262 A1 (Beispiel 6 auf Seite 19) ist es bekannt, wasserabsorbierende Polymerpartikel auf Basis von Polyacrylat durch Suspensionspolymerisation herzustellen. Die Reaktion wird in einem Rührkesselreaktor durchgeführt. Es ist zu erwarten, dass die Partikel auch in dem Rührkesselreaktor agglomerieren.

EP2993191A1 (Beispiel 1 auf Seite 14) offenbart ein Verfahren zur Herstellung von wasserabsorbierenden Polyacrylatpartikeln im Wege der Suspensionspolymerisation und anschließender Agglomeration. Die Polymerisation und Agglomeration finden in einem organischen Dispersionsmittel und in Gegenwart eines Tensides statt. Beide Verfahrensschritte werden in einem Rührkesselreaktor durchgeführt. Die sekundären Polyacrylatpartikel weisen bereits die angestrebte Partikelgrößenvertreilung auf, sodass nach der Agglomeration keine zusätzlichen Mahl- oder Klassierschritte zur Einstellung der finalen Partikelgrößenverteilung erforderlich sind.

Ein Nachteil dieses Standes der Technik besteht darin, dass die Suspensionspolymerisation in einem vergleichsweise großen Rührkesselreaktor durchgeführt werden muss, um Superabsorber in industriellen Maßstab herstellen zu können. Das Wärmemanagement ist bei großen Rührkesselreaktoren schwierig; insbesondere aus dem Innern des Reaktors lässt sich schlecht Reaktionswärme abführen. Da die Polymerisation von Acrylsäure zu Polyacrylat stark exotherm ist, steigt die Temperatur im Innern des Rührkesselreaktors stark an. So kann es lokal begrenzt zu Überhitzungen der frisch entstandenen Polymerpartikel kommen, was sich wiederum negativ auf die Produktqualität auswirkt. Dies kann in einem Rührkessel letztendlich nur durch eine entsprechend große Menge an Dispersionsmittel verhindert werden, in dem die Polymere nicht so stark konzentriert sind. Folglich wird auch ein entsprechend großes Reaktorvolumen benötigt, was die Investitions- und Betriebskosten steigen lässt. Der Vorteil der eingesparten Mahl- und Klassierschritte wird dadurch wieder aufgezehrt. Darüber hinaus sind als Dispersionsmittel einsetzbare, organische Substanzen häufig gesundheitlich und ökologisch bedenklich und sollten deswegen nicht in großer Menge eingesetzt werden.

Im Lichte dieses Standes der Technik liegt der Erfindung die Aufgabe zu Grunde, ein Verfahren zur Herstellung von Polymerpartikeln auf Basis von Acrylsäure mit definierter Gestalt und Größe anzugeben, welches ein verbessertes Wärmemanagement ermöglicht und mit einer möglichst geringen Menge an organischen Substanzen auskommt. Mechanische Arbeitsschritte zum Herstellen von Gestalt und Größe der Partikel - insbesondere Mahlen und Sieben - sollen vermieden werden, um möglichst wenig Unterkorn zu produzieren. Schließlich soll es möglich sein, dass Verfahren im industriellen Maßstab wirtschaftlich zu betrieben.

Gelöst werden diese Aufgaben durch ein Verfahren nach Anspruch 1.

Gegenstand der Erfindung ist mithin ein Verfahren zur Herstellung von Polyacrylatpartikeln im Wege der Suspensionspolymerisation und Agglomeration mit den folgenden Schritten:

a) Bereitstellen von einer Monomerlösung, welche zumindest die folgenden Komponenten aufweist:

- Acrylsäure, die zumindest teilweise neutralisiert sein kann;
- mindestens einen Vernetzer;
- mindestens einen Initiator oder einen Teil eines Initiatorsystems;
- Wasser;

b) Bereitstellen eines organischen Dispersionsmittels, bei welchem es sich um einen aliphatischen Kohlenwasserstoff oder um ein Gemisch, welches einen aliphatischen Kohlenwasserstoff enthält, handelt;
c) Bereitstellen von mindestens einem Tensid;
d) Bereitstellen von mindestens einem Pickering-Emulgator;
e) Herstellen einer Dispersion durch Dispergieren des Monomerlösung in dem Dispersionsmittel;
f) Polymerisieren der Acrylsäure innerhalb des Dispersionsmittels in Gegenwart des Tensids, wodurch primäre Polyacrylatpartikel erhalten werden, welche in dem Dispersionsmittel suspendiert sind;
g) Agglomerieren der primären Polyacrylatpartikel innerhalb des Dispersionsmittels und in Gegenwart des Pickering-Emulgators unter Erhalt von sekundären Polyacrylatpartikeln;
h) Abtrennen der sekundären Polyacrylatpartikeln aus dem Dispersionsmittel;
i) wobei das Polymerisieren zumindest teilweise in einem kontinuierlich betriebenen, ersten Reaktor erfolgt, welcher eine Vielzahl von parallel ausgerichteten Kapillaren aufweist, wobei das Innere der Kapillaren den Reaktionsraum des Reaktors bilden und wobei der erste Reaktor mindestens eine Leitung aufweist, die sich entlang der Kapillaren erstreckt und welche von einem Wärmeträgermedium durchflossen wird;
k) und wobei das Agglomerieren zumindest teilweise in einem diskontinuierlich betriebenen, zweiten Reaktor erfolgt, welcher mindestens einen Behälter aufweist, wobei das Innere des Behälters den Reaktionsraum des zweiten Reaktors bildet.

Das erfindungsgemäße Verfahren kombiniert eine Suspensionspolymerisation mit einer anschließenden Agglomeration, um die gewünschte Partikelgröße und -gestalt einzustellen. Ein wesentlicher Aspekt des erfindungsgemäßen Verfahrens ist dabei, dass für die Schritte Polymerisation und Agglomeration in getrennten Apparaten durchgeführt werden, nämlich die Suspensionspolymerisation in einem kontinuierlich betriebenen Kapillarreaktor und die Agglomeration in einem Batch-Reaktor.

Die Verwendung mikrostrukturierter Apparate ist ein weiterer wesentlicher Aspekt der Erfindung. Der kontinuierliche betriebene erste Reaktor weist eine Vielzahl von parallel ausgerichteten Kapillaren auf, wobei das Innere der Kapillaren den Reaktionsraum des Reaktors bilden. Entlang der Kapillaren erstreckt sich mindestens eine Leitung durch den Reaktor, durch welche ein Wärmeträgermedium fließt. Die Leitung kann die Gesamtheit der Kapillaren rohrförmig ummanteln oder auch als eine Mehrzahl von Leitungen ausgeführt sein, die in die Vielzahl der Kapillaren eingegliedert ist. Die Leitung ist dann ebenfalls als eine Mehrzahl von Kapillaren ausgeführt und mit den Reaktor-Kapillaren gebündelt. In beiden Fällen trennt zumindest die Wand der Kapillaren das Wärmeträgermedium von dem Reaktionsgemisch. Mithin erfolgt die Wärmeübertragung zwischen Reaktionsgemisch und Wärmeträgermedium ohne Stoffaustausch. Insoweit ähnelt ein Kapillarreaktor einem Rohrbündelreaktor, allerdings ist das Verhältnis von Länge zu Durchmesser einer Kapillare viel größer als bei einem Rohr. Verglichen mit Rohrreaktoren weisen Kapillarreaktoren eine große Zahl von Kapillaren mit einem kleinen Durchmesser auf, währenddessen Rohrreaktoren dasselbe Reaktorvolumen mit weniger Rohren von jeweils größerem Durchmesser realisieren. Da die Durchmesser der Kapillaren teilweise im Millimeter- oder Sub-Millimeter-Bereich liegen, werden sie auch als Mini- oder Mikroreaktor bezeichnet. Um mit solchen mikrostrukturierten Apparaten im industriellen Maßstab produzieren zu können, werden die Apparate entsprechend parallelisiert und mit einer kurzen Verweildauer betrieben. Da die Verweildauern in Kapillarreaktoren in der Regel geringer sind als in Rohrreaktoren, herrschen darin auch andere Strömungsbedingungen.

Ein Weiterer wichtiger Unterschied zwischen Rohrbündelreaktoren und Kapillarreaktoren ist, dass die Vielzahl der parallel angeordneten Kapillaren nicht notwendigerweise gebündelt sein müssen: Rohrreaktoren werden traditionell dadurch hergestellt, dass eine Vielzahl von Rohren zu einem Bündel zusammengefasst (gebündelt) werden. Kapillarreaktoren lassen sich indes additiv fertigen, sodass gar keine Rohre als Ausgangsmaterial genutzt werden, sondern Metallpulver. Die Vielzahl der parallel ausgereichten Kapillaren entsteht mithin direkt aus dem additiv zusammengefügten Ausgangsmaterial und nicht durch bündeln von Rohren.

Eine Einführung in die Technologie der chemischen Mikrostrukturtechnik bieten:

Ehrfeld, W., Hessel, V., Löwe, H.: Microreactors: New Technology for Modern Chemistry. Published Online 29 April 2004. Wiley-VCH Verlag GmbH. DOI:10.1002/3527601953.

Ein großer Vorteil eines Kapillarreaktors gegenüber einem Rührkesselreaktor ist das bessere Wärmemanagement. Da bei einem Kapillarreaktor die Reaktionswärme im Wesentlichen über das Wärmeträgermedium abgeführt wird und nicht über das Reaktionsgemisch, kann ein Wärmeträgermedium verwendet werden, dass sich von dem Reaktionsgemisch deutlich unterscheidet. Es kann zum einen physikalisch eine höhere Wärmekapazität aufweisen und auch chemisch einer völlig anderen Stoffklasse zugehörig sein, da es nicht an der Reaktion teilnimmt oder mit den Reaktionsteilnehmern in Kontakt kommt. So kann etwa Wasser als Wärmeträgermedium verwendet werden, was weitestgehend unbedenklich ist und noch dazu eine gute Wärmekapazität aufweist. Da das Dispersionsmittel die Funktion der Wärmeabfuhr in einem Kapillarreaktor nur noch begrenzt wahrnehmen muss - nämlich von dem polymerisierenden Tropfen bzw. frischen Partikel auf die Wandung der Kapillare - kann das Dispersionsmittel in viel geringeren Mengen eingesetzt werden als in einem Rührkesselreaktor. Dies ist insbesondere dann vorteilhaft, wenn das Dispersionsmittel aufgrund seines Kontakts mit den Reaktionsteilnehmern eine besondere chemische Substanz sein muss, die ein Gefahrstoff darstellt.

Ein weiterer Vorteil eines Mikroreaktors ist seine hohe Prozessintensität. Dadurch wird der Bauraum verglichen mit einem Batch-Reaktor verkleinert, was Vorteile bei den Aufstellungskosten erschließt.

Die hohe Prozessintensität wird in einem Kapillarreaktor auch durch eine kurze Verweilzeit erreicht. Da viele Polymerisationen recht rasch ablaufen, können diese auch in Kapillarreaktoren durchgeführt werden. Anders sieht es bei der der Agglomeration aus: Diese benötigt eine gewisse Zeit, die in einem Kapillarreaktor nicht zur Verfügung steht. Um dennoch eine Agglomeration zu ermöglichen, sieht die Erfindung es vor, die Agglomeration von der Polymerisation in einem separaten Apparat durchzuführen, nämlich in einem Batch-Reaktor.

Der Batch-Reaktor ist einfachstenfalls ein Behälter, dessen Innere den Reaktionsraum bildet, in welchem die Agglomeration abläuft. Da die Agglomeration nicht so stark exotherm ist wie die Polymerisation, kommt es auf ein sorgfältiges Wärmemanagement während der Agglomeration nicht an. Vielmehr ist es wichtig, die Verweildauer in dem Batchreaktor richtig zu führen, da die Zeit, welche den Partikeln zur Agglomeration zur Verfügung gestellt wird, die Größe und Gestalt der Agglomerate bestimmt. Die Verweildauer lässt sich in dem Batch-Reaktor gut steuern, da die Sekundärpartikel einfach nach Ablauf der vorgesehenen Verweildauer aus dem Batch-reaktor entnommen werden, nachdem die Primärpartikel dem Batch-reaktor zugeführt wurden.

Prinzip bedingt kommt es bei dem erfindungsgemäßen Verfahren bei der Übergabe der Primärpartikel aus dem ersten Reaktor zu dem zweiten Reaktor zu einem Wechsel von kontinuierlichen Betrieb zu einem Batch-Betrieb. Das Verfahren ist daher ein semi-kontinuierliches Verfahren.

Wenngleich die die Verweildauer in dem kontinuierlich betriebenen Kapillarreaktor deutlich kleiner ist als in dem diskontinuierlich betriebenen Batch-Reaktor, werden sich die Primärpartikel nicht daran hindern lassen, bereits im Kapillarreaktor zu agglomerieren. Ebenso werden in dem Batch-Reaktor bislang nicht polymerisierte Tropfen nachpolymerisieren. Daher finden bei dem erfindungsgemäßen Verfahren die Schritte "Polymerisation" und "Agglomeration" nicht ideal getrennt und nicht ausschließlich in dem ersten bzw. dem zweiten Reaktor statt. Es ist daher erfindungsgemäß angestrebt, in dem ersten Reaktor zumindest teilweise zu polymerisieren und die Agglomeration zumindest teilweise in dem zweiten Reaktor geschehen zu lassen. Besonders bevorzugt ist es, die beiden Verfahrensschritte jeweils möglichst vollständig in dem jeweiligen Reaktor dediziert auszuführen.

Die apparative Trennung von Polymerisation und Agglomeration ermöglicht insgesamt eine bessere Kontrolle über die Größenverteilung der erfindungsgemäß hergestellten Partikel. Der Kapillarreaktor ermöglicht ein besseres Wärmemanagement und verhindert so Qualitätseinbußen durch lokale Überhitzung der Polymerpartikel. Schließlich wird der Bedarf an Dispersionsmittel reduziert. Dies sind im Wesentlichen die Vorteile, welche die Erfindung erreicht.

Das Tensid wird benötigt, um die Monomertropfen besser in der kontinuierlichen Phase zu verteilen. Der Pickering-Emulgator wird benötigt, um größere Primärpartikel zu erzeugen.

Eine bevorzugte Weiterbildung der Erfindung sieht daher vor, dass das Herstellen der Dispersion und das Polymerisieren des Monomers in Gegenwart des Tensids und des Pickering-Emulgators erfolgen. Dies wird dadurch erreicht, dass sowohl das Tensid, als auch der Pickering-Emulgator in dem Dispersionsmittel bereitgestellt werden. Dies bedeutet, dass die beiden Hilfsstoffe bereits stromaufwärts des ersten Reaktors in das Dispersionsmittel eingebracht werden. Da der erste Reaktor kontinuierlich betrieben wird, ist es möglich Pickering-Emulgator und Tensid kontinuierlich in das Dispersionsmittel einzudosieren. Das Mischen kann dort vorzugweise mit einem statischen Mischer erfolgen, der ohne bewegliche Teile auskommt. Die Verwendung eines statischen Mischers hat den Vorteil, dass sich damit die Eigenschaften der Dispersion besser einstellen lassen. Insbesondere ermöglicht der statische Mischer eine besonders homogene Verteilung der beiden Hilfsstoffe in dem Dispersionsmittel.

Das Vermischen der beiden Hilfsstoffe in dem Dispersionsmittel erfolgt vorzugsweise in getrennten Ansätzen und folglich in zwei Schritten. Eine bevorzugte Weiterbildung des Verfahrens sieht demnach vor, dass Tensid und Pickering-Emulgator getrennt bereitgestellt werden, nämlich in einem ersten Ansatz enthaltend das Dispersionsmittel und das Tensid und in einem zweiten Ansatz enthaltend das Dispersionsmittel und den Pickering-Emulgator, und dass das Herstellen der Dispersion in zwei Schritten erfolgt, nämlich mit einem ersten Schritt, bei dem das Monomer mit dem ersten Ansatz vermischt wird und mit einem zweiten Schritt, bei dem das Gemisch aus erstem Ansatz und Monomer mit dem zweiten Ansatz vermischt wird. Diese Vorgehensweise führt zu einer besseren Homogenisierung des Reaktionsgemisches und erlaubt daher einen sparsameren Einsatz der Hilfsstoffe.

Das Vermischen der Ansätze erfolgt vorzugsweise mit mikrostrukturierten Apparaten. Dies hat den Vorteil, dass das in mikrostrukturierten Apparaten herrschende Fluiddynamik über die Apparategrenzen hinweg aufrechterhalten werden kann. Vorzugsweise werden die mikrostrukturierten Apparate sogar über Kapillare miteinander verbunden, damit sich die Strömungsverhältnisse beim Übergang von einem Apparat in den nachfolgenden nicht so stark verändern.

Eine besonders bevorzugte Ausführungsform sieht vor, dass der zweite Schritt, bei dem das Gemisch aus erstem Ansatz und Monomer mit dem zweiten Ansatz vermischt wird, in mindestens einem mikrostrukturierten Mischer erfolgt. Insbesondere kann hierfür ein Raupenmischer eingesetzt werden.

Ein Raupenmischer (engl.: caterpillar mixer) ist ein statischer Mischer in mikrostruktureller Bauart. Er umfasst einen von den zu vermischenden Fluiden durchflossenen Kanal, entlang dessen sich eine Vielzahl von hintereinander angeordneten, auf und absteigenden Rampen angeordnet sind. Die Rampen bewirken eine vielfache Aufteilung und Wiederzusammenführung der Strömung durch den Kanal, sodass die beiden Ansätze intensiv vermischt werden. Die besondere Mischergeometrie erlaubt zudem einen hohen Durchsatz, sodass der Kapillarreaktor mit der Dispersion hinreichend gespeist werden kann.

Eine genauere Beschreibung eines Raupenreaktors findet sich in der oben genannten Monographie von Ehrfeld et al., Abschnitt 3.7.4 Seiten 62f.

Für den ersten Schritt der Vermischung, bei dem das Monomer mit dem ersten Ansatz vermischt wird, wird vorzugsweise ebenfalls ein mikrostruktureller statischer Mischer eingesetzt. Allerdings eignet sich für diese Mischaufgabe besser ein so genannter Interdigitalmischer als ein Raupenmischer, insbesondere bei kleinen Flussraten.

In einem Interdigitalmischer werden die zu mischenden Ströme in viele feine Teilströme aufgeteilt und dann alternierend miteinander wieder zum Vermischen kontaktiert. Eine genauere Beschreibung eines Interdigitalmischers findet sich in der oben genannten Monographie von Ehrfeld et al., Abschnitt 3.8.1 Seiten 64f.

Bei Verwendung eines Raupenmischers im ersten Schritt sollte dieser eine kleinere innere Strukturgröße aufweisen als der Raupenmischer, der vorzugsweise in dem zweiten Schritt, bei dem das Gemisch aus erstem Ansatz und Monomer mit dem zweiten Ansatz vermischt wird, verwendet wird.

Eine bevorzugte Weiterbildung der Erfindung sieht daher vor, dass der erste Schritt, bei dem das Monomer mit dem ersten Ansatz vermischt wird, in mindestens einem Interdigitalmischer erfolgt oder in einem Raupenmischer dessen innere Strukturgröße kleiner ist als die des Raupenmischers, der für den zweiten Schritt verwendet wird. Dies hat zur Folge, dass die Tropfengröße der Dispersion, die in dem ersten Mischschritt hergestellt wird, in dem zweiten Mischschritt beibehalten wird.

Da der Pickering-Emulgator erst in der Agglomeration benötigt wird, ist es möglich, den Pickering Emulgators erst unmittelbar vor der Agglomeration hinzuzudosieren. Dies bedeutet, dass die Polymerisation in Abwesenheit des Pickering Emulgators erfolgt. Die Anwesenheit des Tensids während der Dispersion ist indes unerlässlich.

Eine entsprechende Verfahrensvariante sieht demnach vor, dass das Tensid in dem Dispersionsmittel bereitgestellt wird, und dass der Pickering-Emulgator erst zu Beginn der Agglomeration hinzudosiert wird, dergestalt, dass das Herstellen der Dispersion und die Polymerisation in Gegenwart des Tensids und in Abwesenheit des Pickering-Emulgators erfolgen.

Gemäß der hier verwendeten Definition einer Suspensionspolymerisation ist weder das Monomer (die Acrylsäure), noch das Polymer (das Polyacrylat) in dem Dispersionsmittel löslich. Monomer und Polymer müssen folglich gegen das Dispersionsmittel beständig sein. Im Falle des Polymers bedeutet Beständigkeit insbesondere, dass das Polymer nicht in dem Dispersionsmittel quillt. Dies bedeutet, dass das Dispersionsmittel nicht in das Polymer migriert und so eine Volumenänderung der Partikel hervorruft. Eine Quellung stellt noch keine Lösung des Polymers in dem Dispersionsmittel dar, ist aber gleichwohl unerwünscht, dass das Dispersionsmittel in dem gequollenen Polymer verbleibt und ggf. aufwändig wieder ausgetrieben werden muss. Aus diesem Grunde sollte das Quellverhalten des Polymers gegenüber dem Dispersionsmittel möglichst gering sein.

Das Quellverhalten von Kunststoffen gegenüber Flüssigkeiten ist allgemein sehr unterschiedlich ausgeprägt und auch temperaturabhängig. Eine standardisierte Testmethode zur Bestimmung der Quellung von festen Polymeren gegenüber Flüssigkeiten beschreibt die DIN EN ISO 175. Dabei wird ein Prüfkörper bei einer bestimmten Temperatur in die Prüfflüssigkeit eingetaucht und sodann seine Volumenänderung bestimmt.

In Bezug auf die vorliegende Erfindung ist es zweckmäßig, wenn die nach DIN EN ISO 175, Ausgabedatum 2011-03-01, bei einer Prüftemperatur von 70°C und einer Prüfdauer von 1h bestimmte prozentuale Änderung der Masse der Polyacrylatpartikel bei Eintauchen in das Dispersionsmittel kleiner ist als 100.

Dies bedeutet, dass sich das Volumen der Partikel nicht verdoppelt, wenn die Partikel eine Stunde bei 70°C in dem Dispersionsmittel eintauchen. In Hinblick auf die Herstellung der Superabsorber bedeutet dies, dass Wasser als Dispersionsmittel völlig ungeeignet ist, da Superabsorber das bis zu tausendfache ihres Trockengewichts an Wasser aufnehmen können und dabei in einem weit größeren Umfang quellen als zu 100 %.

Das vorliegende Verfahren eignet sich vorzüglich, um Superabsorber herzustellen. Dafür wird erfindungsgemäß eine spezielle Monomerlösung bereitgestellt, welche die folgenden Komponenten enthält:

a) Acrylsäure als Monomer, die zumindest teilweise neutralisiert sein kann;
b) mindestens einen Vernetzer;
c) mindestens einen Initiator oder einen Teil eines Initiatorsystems;
d) Wasser.

Da aufgrund der hohen Wasseraufnahme der Superabsorber Wasser als Dispersionsmittel ungeeignet ist, wird als Dispersionsmittel ein aliphatischer Kohlenwasserstoff verwendet. Alternativ kann ein Gemisch als Dispersionsmittel verwendet werden, welches mindestens einen aliphatischen Kohlenwasserstoff enthält.

Die hier als Monomer verwendete Substanz ist Acrylsäure. Teilneutralisierte Acrylsäure ist ebenfalls Acrylsäure im Sinne der Erfindung. Sofern die Acrylsäure mit Alkalimetallen neutralisiert ist, etwa mit Natriumhydroxid, erhält man als Polymer entsprechende Alkaliacrylate wie etwa Natriumacrylat. Ein Alkaliacrylat ist ebenfalls ein Polyacrylat im Sinne der Erfindung.

Neben der Acrylsäure kann die Monomerlösung noch weitere Monomere enthalten, die mit der Acrylsäure copolymerisiert werden. Sofern Copolymere in die Polymerpartikel einpolymerisiert sind, wird in diesem Zusammenhang vereinfachend immer noch von Polyacrylatpartikel gesprochen.

Ein Coponomer, welches zur Herstellung von Superabsorbern verwendet werden kann, sollte vorzugsweise ethylenisch ungesättigt sein und mindestens eine Säuregruppe aufweisen.

Beispiele für ethylenisch ungesättigte, säuregruppenhaltige Monomere oder Comonomere sind Acrylsäure, Methacrylsäure, Ethacrylsäure, alpha-Chloracrylsäure, alpha-Cyanoacrylsäure, beta-Methylacrylsäure (Crotonsäure), alpha-Phenylacrylsäure, beta-Acryloxypropionsäure, Sorbinsäure, alpha-Chlorsorbinsäure, 2'-Methylisocrotonsäure, Zimtsäure, p-Chlorzimtsäure, beta-Stearylsäure, Itaconsäure, Citraconsäure, Mesaconsäure, Glutaconsäure, Aconitsäure, Maleinsäure, Fumarsäure, Tricarboxyethylen und Maleinsäureanhydrid, wobei Acrylsäure sowie Methacrylsäure besonders und Acrylsäure darüber hinaus bevorzugt sind. Acrylsäure ist das in der industriellen Produktion von Superabsorbern meist verwendete Standard-Monomer.

Die ethylenisch ungesättigten, säuregruppenhaltigen Monomere können teilweise oder vollständig, bevorzugt teilweise neutralisiert sein. Vorzugsweise sind die monoethylenisch ungesättigten, säuregruppenhaltigen Monomere zu mindestens 10 Mol-%, besonders bevorzugt zu mindestens 25 bis 50 Mol-% und darüber hinaus bevorzugt zu 50-90 Mol-% neutralisiert. Die Neutralisation der Monomere kann vor, aber auch nach der Polymerisation erfolgen. Hierbei erfolgt die Teilneutralisierung zu mindestens 10 Mol-%, besonders bevorzugt zu mindestens 25 bis 50 Mol-% und darüber hinaus bevorzugt zu 50-90 Mol-%. Ferner kann die Neutralisation mit Alkalimetallhydroxiden, Erdalkalimetallhydroxiden, Ammoniak sowie Carbonaten und Bicarbonaten erfolgen. Daneben ist jede weitere Base denkbar, die mit der Säure ein wasserlösliches Salz bildet. Auch eine Mischneutralisation mit verschiedenen Basen ist denkbar. Bevorzugt ist die Neutralisation mit Ammoniak oder mit Alkalimetallhydroxiden, besonders bevorzugt mit Natriumhydroxid oder mit Ammoniak.

Als Vernetzer eignen sich insbesondere so genannte Kondensationsvernetzer, die mindestens zwei ethylenisch ungesättigten Gruppen innerhalb eines Moleküls aufweisen. Beispiele dafür sind: Alke¬nyldi(meth)acrylate, beispielsweise Ethylenglykoldi(meth)acrylat, 1,3-Pro-pylenglykol-di(meth)acrylat, 1,4-Butylenglykoldi(meth)acrylat, 1,3-Butylengly-koldi(meth)acrylat, 1,6-Hexandioldi(meth)acrylat, 1,10-Decandioldi(meth)acrylat, 1,12-Dodecandioldi(meth)acrylat, 1,18-Octadecandioldi(meth)acrylat, Cyclopen¬tandioldi(meth)acrylat, Neopentylglykoldi(meth)acrylat, Methylendi(meth)acrylat oder Pentaerythritdi(meth)acrylat, Alkenyldi(meth)acrylamide, beispielsweise N-Methyldi(meth)acrylamid, N,N'-3-Methylbutylidenbis(meth)acrylamid, N,N'-(1,2-Di-hydroxyethylen)bis(meth)acrylamid, N,N'-Hexamethylenbis(meth)acryl-acrylamid oder N,N'-Methylenbis(meth)acrylamid, Polyalkoxydi(meth)acrylate, beispielsweise Diethylenglykoldi-(meth)acrylat, Triethylenglykoldi(meth)acrylat, Tetraethylenglykoldi(meth)acrylat, Dipropylenglykoldi(meth)acrylat, Tripropylenglykoldi(meth)acrylat oder Tetrapropylenglykoldi-(meth)acrylat, Bisphenol-A-di(meth)acrylat, ethoxyliertes Bisphenol-A-di(meth)acrylat, Benzylidindi(meth)acrylat, 1,3-Di(meth)acryloyloxy-propanol-2, Hydrochinondi(meth)acry- lat, Di(meth)acrylatester des vorzugsweise mit 1 bis 30 Mol Alkylenoxid pro Hydroxylgruppe oxyalkylierten, vorzugsweise ethoxylierten Trimethylolpropans, Thioethylenglykoldi(meth)-acrylat, Thiopropylenglykoldi(meth)acrylat, Thiopolyethylenglykoldi(meth)acrylat, Thiopoly-propylenglykoldi(meth)acrylat, Divinylether, beispielsweise 1,4-Butandioldivinylether, Divinylester, beispielsweise Divinyladipat, Alkandiene, beispielsweise Butadien oder 1,6-Hexadien, Divinyl¬benzol, Di(meth)allylverbindungen, beispielsweise Di(meth)allylphthalat oder Di(meth)allylsuccinat, Homo- und Copolymere von Di(meth)allyldimethylammonium-chlorid und Homo- und Copolymere von Diethyl(meth)allyl- aminomethyl(meth)acrylat-ammoniumchlorid, Vinyl-(meth)acryl-Verbindungen, beispielsweise Vinyl(meth)acrylat, (Meth)allyl-(meth)acrylVerbindungen, bei¬spielsweise (Meth)allyl(meth)acrylat, mit 1 bis 30 Mol Ethylenoxid pro Hydro¬xylgruppe ethoxyliertes (Meth)allyl(meth)acrylat, Di(meth)allylester von Polycarbonsäuren, beispielsweise Di(meth)allylmaleat, Di(meth)allyfumarat, Di(meth)allylsuccinat oder Di(meth)allylterephthalat, Verbindungen mit drei oder mehr ethylenisch ungesättigten, radikalisch polymerisierbaren Gruppen wie beispielsweise Glycerintri(meth)acrylat, (Meth)acrylatester des mit vorzugsweise 1 bis 30 Mol Ethylenoxid pro Hydroxylgruppe oxethylierten Glycerins, Trimethylolpropantri(meth)acrylat, Tri(meth)acrylatester des vorzugsweise mit 1 bis 30 Mol Alkylenoxid pro Hydroxylgruppe oxyalkylierten, vorzugsweise etho¬xylierten Trimethylolpropans, Trimethacrylamid, (Meth)allylidendi(meth)acrylat, 3-Allyloxy-1,2-propandioldi(meth)acrylat, Tri-(meth)allylcyan-urat, Tri(meth)allylisocyanurat, Pentaerythrittetra(meth)acrylat, Pentaerythrittri-(meth)acrylat, (Meth)acrylsäureester des mit vorzugsweise 1 bis 30 Mol Ethylenoxid pro Hydroxylgruppe oxyethylierten Pentaerythrits, Tris(2-hydroxyethyl)isocyanurattri(meth)acrylat, Trivinyltrimellitat, Tri(meth)allyamin, Di(meth)allylalkylamine, beispielsweise Di(meth)allyl-methylamin, Tri-(meth)allylphosphat, Tetra(meth)allylethylendiamin, Poly(meth)allylester, Tetra(meth)allyloxi-ethan oder Tetra(meth)allylammoniumhalide.

Alternativ können auch Polyole als Vernetzer verwendet werden. Beispiele für als Vernetzer geeignete Polyole sind:

Ethylenglykol, Polethylenglykole wie Diethylenglykol, Triethylenglykol und Tetraethylenglykol, Propylenglykol, Polypropylenglykole wie Dipropylenglykol, Tripropylenglykol oder Tetrapropylenglykol, 1,3-Butandiol, 1,4-Butandiol, 1,5-Pentandiol, 2,4-Pentandiol, 1,6-Hexandiol, 2,5-Hexandiol, Glycerin, Polyglycerin, Trimethylolpropan, Polyoxypropylen, Oxyethylen-Oxypropylen-Blockcopolymere, Sorbitanfettsäureester, Polyoxyethylensorbitan-fettsäureester, Pentaerythrit, Polyvinylalkohol und Sorbitol, Aminoalkohole, beispiels¬weise Ethanolamin, Diethanolamin, Triethanolamin oder Propanolamin, Polyaminverbindun¬gen, beispielsweise Ethylendiamin, Diethylentriaamin, Triethylentetraamin, Tetraethylenpentaamin oder Pentaethylenhexaamin, Polyglycidylether-Verbindungen wie Ethylenglykol-iglycidylether, Polyethylenglykol¬diglycidylether, Glycerindiglycidylether, Glycerinpolyglycidy-ether, Pentareritritpolyglycidylether, Propylenglykoldiglycidylether Polypropylenglykoldiglyci-dylether, Neopentylglykoldiglycidylether, Hexandiolglycidylether, Trimethylolpro¬panpolyglyci-dylether, Sorbitolpolyglycidylether, Phtahlsäurediglycidylester, Adipinsäurediglycidylether, 1,4-Phenylen-bis(2-oxazolin), Glycidol, Polyisocyanate, vorzugsweise Diisocyanate wie 2,4-Toluoldiisocyanat und Hexamethylendiisocyanat, Polyaziridin-Verbindungen wie 2,2-Bishydroxymethylbutanol-tris[3-(1-aziridinyl)propionat], 1,6-Hexamethylendiethylenharnstoff und Diphenylmethan-bis-4,4'-N,N'-diethylenharnstoff, Halogenperoxide beispielsweise Epichlor- und Epibromhydrin und $\alpha$-Methylepichlorhydrin, Alkylencarbonate wie 1,3-Dioxolan-2-on (Ethylencarbonat), 4-Methyl-1,3-dioxolan-2-on (Propylencarbonat), 4,5-Di¬methyl-1,3-dioxolan-2-on, 4,4-Dimethyl-1,3-dioxolan-2-on, 4-Ethyl-1,3-dioxolan-2-on, 4-Hydroxymethyl-1,3-dioxolan-2-on, 1,3-Dioxan-2-on, 4-Methyl-1,3-dioxan-2-on, 4,6-Dimethyl-1,3-dioxan-2-on, 1,3-Dioxolan-2-on, Poly-1,3-dioxolan-2-on, polyquartäre Amine wie Kondensationsprodukte von Dimethylaminen und Epichlorhydrin. Als Verbindungen der Vernetzerklasse II sind des Weiteren Polyoxazoline wie 1,2-Ethylenbisoxazolin, Vernetzer mit Silangruppen wie *-Glycidoxypropyltrimethoxysilan und *-Aminopropyltrimethoxysilan, Oxazolidinone wie 2-Oxazolidinon, Bis- und Poly-2-oxazolidinone und Diglykolsilikate bevorzugt.

Schließlich können noch hydroxyl- oder aminogruppenhaltige Ester der (Meth)acrylsäure als Vernetzer wendet werden. Beispiele dafür sind 2-Hydroxyethyl(meth)acrylat und 2-Hydroxypropyl-(meth)acrylat sowie hydroxyl- oder aminogruppenhaltige (Meth)acrylamide oder Mono(meth)allylverbindungen von Diolen.

Selbstverständlich kann die Monomerlösung zur Herstellung der Superabsorber auch mehrere Vernetzer der genannten Strukturen enthalten.

Sofern Acrylsäure als Monomer verwendete wird, sind die folgenden Vernetzer am meisten bevorzugt: N,N'-Methylenbisacrylamid, Polyethylenglykoldi(meth)acrylate, Triallylmethylammoniumchlorid, Tetraallylammoniumchlo-rid sowie mit 9 Mol Ethylenoxid pro Mol Acrylsäure hergestelltes Allylnonaethylenglykolacrylat.

Um die Polymerisation hervorzurufen, wird ein Initiator oder zumindest ein Teil eines Initiatorsystems benötigt, der in der Monomerlösung bereitgestellt wird.

Zur Initiierung der Polymerisation können grundsätzlich alle unter den Polymerisationsbedingungen Radikale bildende Initiatoren verwendet werden, die üblicherweise bei der Herstellung von Superabsorbern eingesetzt werden. Hierzu gehören thermische Initiatoren und Redox-Initiatoren. Die Initiatoren werden in der Monomerlösung gelöst oder dispergiert. Sofern die Monomerlösung wässrig ist, sollten wasserlöslicher Initiatoren eingesetzt werden.

Besonders bevorzugt werden im erfindungsgemäßen Verfahren thermische Initiatoren verwendet, die unter Temperatureinwirkung in Radikale zerfallen. Grund dafür ist die Verwendung des Kapillarreaktors: Anders als bei der Verwendung eines Redox-basierten Initiatorsystems wird lediglich eine Komponente als Initiator benötigt, sodass der Mischaufwand sinkt. Da der Kapillarreaktor ein gutes Wärmemanagement ermöglicht, lässt sich thermische Initiator gut in der Kapillare auslösen.

Aufgrund der geringen Verweilzeiten im Kapillarreaktor sind insbesondre thermische Polymerisationsinitiatoren mit einer geringen Halbwertszeit für das vorliegende Verfahren interessant. Die Halbwertszeiten sollten unter 10 Sekunden, darüber hinaus bevorzugt von weniger als 5 Sekunden liegen; jeweils bei einer Temperatur bei weniger als 180 °C, darüber hinaus bevorzugt bei weniger als 140°C. Dabei sind Peroxide, Hydroperoxide, Wasserstoffperoxid, Persulfate sowie Azoverbindungen besonders bevorzugte thermische Polymerisationsinitiatoren. Ganz besonders bevorzugt wird Kaliumperoxodisulfat als alleiniger Initiator eingesetzt. In manchen Fällen ist es hingegen vorteilhaft, Mischungen verschiedener thermischer Polymerisationsinitiatoren zu verwenden. Unter diesen Mischungen sind die aus Wasserstoffperoxid und Natrium- oder Kaliumperoxodisulfat bevorzugt, die in jedem denkbaren Mengenverhältnis eingesetzt werden können.

Geeignete organische Peroxide sind vorzugsweise Acetylacetonperoxid, Methylethylketonperoxid, Benzoylperoxid, Lauroylperoxid, Acetylperoxid, Capyrlperoxid, Isopropylperoxydicarbonat, 2-Ethylhexylperoxydicarbonat, t-Butylhydroperoxid, Cumolhydroperoxid, t-Amylperpivalat, t-Butylperpivalat, t-Butylperneohexonat, t-Butylisobutyrat, t-Butylper-2-ethylhexenoat, t-Butylperisononanoat, t-Butylpermaleat, t-Butylperbenzoat, t-Butyl-3,5,5-tri-methylhexanoat und Amylperneodekanoat. Weiterhin sind als thermische Polymerisationsinitiatoren bevorzugt: AzoVerbindungen, wie Azobisisobutyronitrol, Azobisdimethylvaleronitril, 2,2'-Azobis-(2-amidinopropan)dihydrochlorid, Azo-bis-amidinopropan-dihydrochlord, 2,2'-Azobis-(N,N-dimethylen)-isobutyramidin-dihydrochlorid, 2- (Carbamoylazo)- isobutyronitril und 4,4'-Azobis-(4-cyanovaleriansäure). Die genannten Verbindungen werden in üblichen Mengen eingesetzt, vorzugsweise in einem Bereich von 0,01 bis 5, bevorzugt von 0,1 bis 2 Mol-%, jeweils bezogen auf die Menge der zu polymerisierenden Monomere.

Alternativ zu einem thermischen Initiator kann auch ein aus mindestens zwei Komponenten bestehendes Redox-System als Initator verwendet werden. Dabei wirkt eine Komponente reduzierend, die andere oxidierend. Um die Redox-Induzierte Polymerisation zu starten, werden die reduzierende und die oxidierende Komponente des Redox-Systems gemischt. Dies kann erst unmittelbar vor oder besser erst im Kapillarreaktor erfolgen, da andernfalls die Polymerisation zu früh startet und die Polymere die Kapillare verstopfen. Deswegen wird die Monomerlösung nur mit einer Komponente des Initiator Systems bereitgestellt und sodann mit der zweiten Komponente vermischt. Dies ist etwas aufwändiger, weswegen thermisch wirkende Initiatoren bevorzugt sind.

Falls dennoch ein bewährtes Redox-System eingesetzt werden soll, eignen sich als oxidische Komponente mindestens eine der oben angegebenen Perverbindungen und als reduzierende Komponente vorzugsweise Ascorbinsäure, Glukose, Sorbose, Manose, Ammonium- oder Alkalimetall-hydrogensulfit, -sulfat, -thiosulfat, -hyposulfit oder-sulfid, Metallsalze, wie Eisen-II-ionen oder Silberionen oder Natriumhydroxymethylsulfoxylat. Vorzugsweise wird als reduzierende Komponente des Redoxinitiators Ascorbinsäure oder Natriumpyrosulfit verwendet. Bezogen auf die bei der Polymerisation eingesetzte Menge an Monomeren wird $1*10^{-5}$ bis 1 Mol-% der reduzierenden Komponente des Redoxinitiators und $1*10^{-5}$ bis 5 Mol-% der oxidierenden Komponente des Redoxinitiators eingesetzt. Anstelle der oxidierenden Komponente des Redoxinitiators, oder in Ergänzung zu diesem, können ein oder mehrere, vorzugsweise wasserlösliche, Azoverbindungen verwendet werden.

Ein besonderes bewährtes Redoxsystem setzt sich aus Wasserstoffperoxid, Natriumperoxodisulfat und Ascorbinsäure zusammen. In der Regel wird die Polymerisation mit diesen Initiatoren in einem Temperaturbereich von 0°C bis 90°C initiiert.

Aufgrund der kurzen Verweilzeiten im Kapillarreaktor eignen sich Photoinitiatoren, deren Zerfall durch Einwirkung energiereicher Strahlung ausgelöst wird, für das vorliegende Verfahren eher weniger.

Bei dem aliphatischen Kohlenwasserstoff, welcher als Dispersionsmittel eingesetzt wird, handelt es sich vorzugsweise um Cyclohexan. Alternativ können die folgenden aliphatischen Kohlenwasserstoffe als Dispersionsmittel eingesetzt werden: n-Hexan, n-Heptan, 2-Metylhexan, 2-Metylhexan, 2,3-Dimethylpentan, 3-Ethylpentan, n-Oktan, Methylcyclohexan, Cyclopentan, Methylcyclopentan, trans-1,2-Dimethylcyclopentan, cis-1,3-Dimethylcyclopentan, trans-1,3-Dimethylcyclopentane. Es können selbstverständlich auch Gemische dieser aliphatischen Kohlenwasserstoffe als Dispersionsmittel verwendet werden.

Bei dem Tensid handelt es sich vorzugsweise um einen Sorbitanfettsäureester. Beispiele für geeignete Sorbitanfettsäureester sind Sorbitanmonostearat (E491), Sorbitantristearat (E492), Sorbitanmonolaurat (E493), Sorbitanmonooleat (E494), Sorbitanmonopalmitat (E495), und Sorbitantrioleat. Die Sorbitanfettsäureester mit den aufgeführten E-Nummern haben eine Lebensmittelzulassung und sind deswegen für den Kontakt mit Hygieneartikeln bevorzugt. Besonders bevorzugt sind Sorbitanmonolaurat (E493) und Sorbitanmonooleat (E494). Es können auch Mischungen dieser Tenside verwendet werden.

Als Pickering-Emulgator wird vorzugsweise ein Organoschichtsilicat verwendet. Organoschichtsilicate (engl.: organoclays) sind organisch nachbehandelte Schichtsilicate. Bevorzugt wird ein mit quartären Ammoniumsalzen nachbehandeltes Schichtsilicat eingesetzt, besonders bevorzugt ein mit quartären Ammoniumsalzen nachbehandeltes Betonit (Quaternary Ammonium Bentonite Complex, QABC). Ein geeignetes Organoschichtsilicat vom Typ QABC ist erhältlich von Byk-Chemie GmbH, Wesel (Deutschland) unter dem Handelsnamen Tixogel-VZ.

Es wurde bereits erwähnt, dass Kapillare verglichen mit Rohren bei derselben Länge einen viel geringeren Querschnitt aufweisen. Besonders bevorzugt beträgt das Verhältnis *L/d* jeder Kapillare zwischen 50 und 500. L bezeichnet dabei die Länge der Kapillare und *d* den Äquivalentdurchmesser. Der Äquivalentdurchmesser bezeichnet den Durchmesser eines gedachten Kreises, dessen Querschnittsfläche identisch ist mit der Querschnittsfläche der Kapillare. Bei einer quadratischen Querschnittsfläche mit der Seitenlänge a berechnet sich der Äquivalentdurchmesser d demnach zu:

$$d = 2 \cdot a / \sqrt{\pi}$$

Weist die Kapillare einen kreisförmigen Querschnitt auf, entspricht der Äquivalentdurchmesser dem tatsächlichen Durchmesser.

Vorzugsweise liegt der Äquivalentdurchmesser einer Kapillare zwischen 1 mm und 10 mm. Vorzugsweise weisen alle Kapillare denselben Äquivalentdurchmesser auf.

Um die Wärmeabfuhr aus dem ersten Reaktor zu verbessern, kann das Wärmeträgermedium durch eine Vielzahl von Leitungen entlang der Kapillaren geführt werden. Die Leitungen können auf diese Weise mit den Kapillaren, in denen die Reaktion stattfindet, alternierend angeordnet sein. Eine bevorzugte Ausführungsform der Erfindung sieht demnach vor, dass der erste Reaktor eine Vielzahl von Leitungen aufweist, welche sich entlang der Kapillaren erstrecken und durch welche das Wärmeträgermedium fließt, dergestalt, dass die Leitungen für das Wärmeträgermedium und die Kapillaren eine gemeinsame Parallelanordnung bilden. Die Leitungen, durch welche das Wärmeträgermedium entlang der Kapillaren fließt, können hinsichtlich ihrer Abmessungen ähnlich dimensioniert sein wie die Kapillaren, d.h. Querschnittsfläche und Länge kann im Wesentlichen gleich sein. Um die Wärmeabfuhr zu verbessern, können die Kapillaren (Reaktionsraum) und die Leitungen (Wärmetransport) alternierend oder sandwichartig innerhalb der Parallelanordnung angeordnet sein.

Eine besonders bevorzugte Rezeptur zur Herstellung von Superabsorbern mit dem erfindungsgemäßen Verfahren setzt sich wie folgt zusammen:

Monomerlösung:

- Acrylsäure als Monomer;
- 33 Gew.-% bis 50 Gew.-% Natriumhydroxid, bezogen auf die Einwaage der Acrylsäure;
- 164 Gew.-% bis 247 Gew.-% Wasser, bezogen auf die Einwaage der Acrylsäure;
- 778 Gew.-ppm bis 1167 Gew.-ppm N,N'-Methylenbisacrylamid als Vernetzer, bezogen auf die Einwaage der Acrylsäure;
- 1206 Gew.-ppm bis 1809 Gew.-ppm Kaliumperoxodisulphat als Initiator, bezogen auf die Einwaage der Acrylsäure;

Dispersionsmittel:

- Cyclohexan, wobei die Menge an eingesetztem Cyclohexan 606 Gew.-% bis 909 Gew.-% beträgt, bezogen auf die Einwaage der Acrylsäure;

Tensid:

- Sorbitanfettsäureester, wobei die Menge an eingesetztem Sorbitanfettsäureester 1 Gew.-% bis 2 Gew.-% beträgt, bezogen auf die Einwaage der Acrylsäure;

Pickering-Emulggator:

- Schichtsilikat, wobei die Menge an eingesetztem Schichtsilikat 2 Gew.-% bis 3 Gew.-% beträgt, bezogen auf die Einwaage der Acrylsäure.

Ganz besonders bevorzugt wird die Monomerlösung nach dieser Rezeptur wie folgt bereitgestellt:

a) Bereitstellen von Acrylsäure;
b) Bereitstellen von wässrigem Natriumhydroxid;
c) Bereitstellen von Methylenbiacrylamid;
d) Bereitstellen einer wässrigen Lösung enthaltend Kaliumperoxodisulphat;
e) Vermischen von Acrylsäure, wässrigem Natriumhydroxid und Methylenbiacrylamid unter Erhalt von neutralisierter Acrylsäure;
f) Vermischen der neutralisierten Acrylsäure mit der wässrigen Lösung enthaltend Kaliumperoxodisulphat in mindestens einem Interdigitalmischer.

Ein besonderer Vorteil dieser Superabsorberherstellung ist, dass die Superabsorber bereits in der gebrauchsfähigen Größe aus der Agglomeration entnommen werden können, ohne dass weitere Arbeitsschritte zur Einstellung der Partikelgrößenverteilung notwendig sind. Dies spart nicht nur zusätzliche Arbeitsschritte ein, sondern reduziert auch den Anfall von Fines. Eine besondere Weiterentwicklung des Verfahrens sieht es demnach vor, dass die aus dem Dispersionsmittel abgetrennten sekundären Polyacrylatpartikel getrocknet werden, wobei der $D_{50}$-Wert der gemäß ISO 17190-3 (Ausgabe 2001-12-01) bestimmten Partikelgrößenverteilung der getrockneten sekundären Polyacrylatpartikel zwischen 200 $\mu$m und 600 $\mu$m beträgt, unter der Maßgabe, dass weder die abgetrennten sekundären Polyacrylatpartikel, noch die getrockneten sekundären Polyacrylatpartikel einer Mahlung und/oder einer Klassierung unterworfen werden.
Zum Trocknen der abgetrennten sekundären Polyacrylatpartikel können allgemein bekannte Trocknerbauarten verwendet werden. Es eignen sich vor allem Sprühtrockner (engl. spray dryer) oder Rotationstrockner (rotary dryer). Beide Trocknerbauarten sind von diversen Apparatebauern kommerziell erhältlich. Sie werden eingehend beschrieben in Tsotsas, E. , Metzger, T., Gnielinski, V. and Schlünder, E. (2010). Drying of Solid Materials. In Ullmann's Encyclopedia of Industrial Chemistry, (Ed.). Section 2.1.5. and Section 2.2.4 doi:10.1002/14356007.b02_04.pub2;
Die Verwendung eines Sprühtrockneres hat den Vorteil, dass das Wasser vergleichsweise schonend aus dem Polymerpartikel ausgetrieben werden kann, sodass mit der Trocknung nicht so starke Änderungen der Morphologie der Polymerpartikel einhergehen. Sprühtrockner sind daher besonders bevorzugt.
Die Erfindung soll nun anhand von Ausführungsbeispielen näher erläutert werden. Hierfür zeigen:

Figur 1:    Verfahrensablauf, schematisch;
Figur 2:    Reaktorkonzept;
Figur 3:    Verfahrensfließbild Versuchsaufbau:

**Verfahrensablauf:**

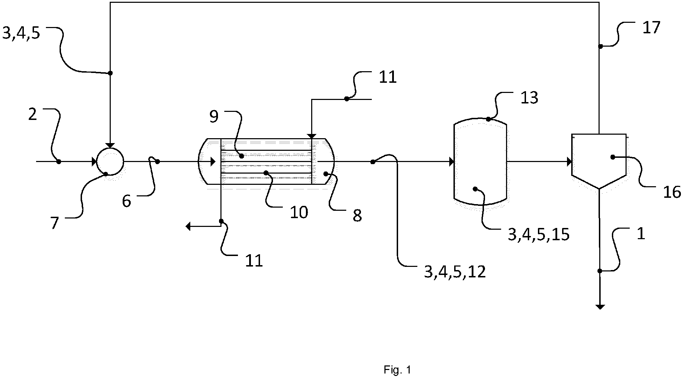

In Figur 1 ist die erfindungsgemäße Herstellung von Polymeren anhand eines vereinfachten Verfahrensfließbildes dargestellt.

Ziel des Prozesses ist die Herstellung von Polyacrylatpartikeln 1. Hierfür wird zunächst ein Monomer 2 in flüssiger Form bereit gestellt. Das Monomer 2 und die Art dessen Bereitstellung hängt von dem Polymer ab. In der Regel wird das Monomer 2 in einem Lösungsmittel gelöst bereit gestellt; insoweit spricht man von einer Monomerlösung.

Des Weiteren wird ein flüssiges Dispersionsmittel 3 bereitgestellt. Bei dem Dispersionsmittel 3 handelt es sich um ein Medium, in dem die Reaktion durchgeführt wird und welches an der Reaktion im Wesentlichen nicht teilnimmt. Die chemische Natur des Dispersionsmittels 3 hängt von den Reaktionsteilnehmern ab.

Das Verfahren benötigt zwei wesentliche Hilfsstoffe, nämlich ein Tensid 4 und ein Pickering-Emulgator 5. Beide Stoffe können flüssig oder fest sein. Damit sie während der Reaktion ihre Wirkung entfalten, müssen sie in dem Dispersionsmittel feinverteilt werden. Abhängig davon, ob Tensid 4 und Pickering-Emulgator 5 flüssig oder fest sind, werden sie in dem Dispersionsmittel 3 gelöst, emulgiert oder suspendiert. Wann dies geschieht, hängt von dem Prozess ab. Im allgemeinen Fall werden Tensid 4 und Pickering-Emulgator 5 in dem Dispersionsmittel 3 bereit gestellt.

Nun wird eine Dispersion 6 hergestellt, in dem das Monomer 2 in dem Dispersionsmittel 3 dispergiert wird. Dies erfolgt in einem ersten Mischer 7. Die Dispersion 6 enthält mithin das Monomer 2, das Dispersionsmittel 3, das Tensid 4 und den Pickering-Emulgator 5.

Die Dispersion 6 wird nun in einen ersten Reaktor 8 überführt um dort das Monomer zu polymerisieren. Bei dem ersten Reaktor 8 handelt es sich um einen kontinuierlich betriebenen Kapillarreaktor. Dieser umfasst eine Vielzahl von Kapillaren 9. Die Kapillaren 9 bilden den Reaktionsraum des ersten Reaktors 8 in dem die Polymerisation erfolgt. Die Kapillaren 9 sind innerhalb des ersten Reaktors 8 zu einem parallelisiert angeordnet. Parallel eingearbeitet sind auch eine Vielzahl von Leitungen 10, durch welche ein Wärmeträgermedium 11 geführt wird. Die Leitungen für das Wärmeträgermedium und die Kapillaren 9 verlaufen innerhalb der Anordnung parallel. Die Dispersion wird ausschließlich durch die Kapillaren 9 geführt, das Wärmeträgermedium 11 in den Leitungen 10. Daher sind Wärmeträgermedium 11 und Dispersion 6 stofflich voneinander getrennt, sodass das Wärmeträgermedium 11 nicht an der Reaktion teilnehmen kann. Gleichwohl kann über die Wandungen von Leitungen 10 und Kapillaren 8 ein Wärmeaustausch zwischen dem Wärmeträgermedium 11 und der Dispersion 6 stattfinden. Deswegen wird der erste Reaktor 8 einschließlich seiner Kapillaren 9 und Leitungen 10 vorzugsweise in einem stark wärmeleitenden Material ausgeführt, wie Metall. Um die Packungsdichte zu erhöhen, können die Kapillaren 9 und die Leitung 10 mit einem rechteckigen Querschnitt versehen sein. Die Herstellung des ersten Reaktors 8 erfolgt mit Hilfe additiver Fertigungsmethoden. Dies ermöglicht es insbesondere, die Packungsdichte der Kapillare 9 verglichen mit gebündelten Rohren zu erhöhen.

Ein wichtiger Aspekt des ersten Reaktors ist seine Mikrostrukturiertheit. Insbesondere die Kapillaren weisen einen sehr geringen Querschnitt auf, sodass der Äquivalentdurchmesser einer Kapillare 8 lediglich zwischen 1 mm und 10 mm beträgt. Bei einer quadratischer Querschnittsfläche entspricht dies einer Seitenlänge zwischen 0.89 mm und 8.86 mm. Die Länge der Kapillare 8 ist im Vergleich zu dem Äquivalentdurchmesser sehr groß, etwa 50 bis 500 mal so lang. So kann eine Kapillare mit dem Äquivalentdurchmesser $d$= 0.89mm eine Länge /von 20 cm aufweisen, sodass das Verhältnis l/d 225 beträgt.

In diesem Fall beträgt das Innenvolumen einer einzelnen Kapillare lediglich 158 mm$^3$ Um ein ausreichend großes Reaktionsvolumen bereit zu stellen, werden mithin eine Vielzahl von Kapillaren in dem ersten Reaktor zusammengefasst. Beispielsweise kann der erste Reaktor zehn Kapillare aufweisen, sodass das gesamte Reaktionsvolumen 15.8 cm$^3$ beträgt. Um im industriellen Maßstab mit damit ausreichend Polymer produzieren zu können, wird der Kapillarreaktor mit einem sehr großen Durchsatz gefahren mit dem Ziel, die Verweilzeit in den Kapillaren zu verkürzen. Die Prozessintensität ist dementsprechend hoch. Alternativ kann eine Vielzahl von Kapillarreaktoren parallel geschaltet werden, um die Gesamtkapazität zu erhöhen (numbering up). Die Dimensionen der einzelnen Kapillaren bleiben dann erhalten. Auf diese Weise können die optimierten Strömungsverhältnisse in den Kapillaren auch im größeren Produktionsmaßstab genutzt werden.

Um dies zu erreichen, ist eine leistungsfähiges Wärmemanagement erforderlich. Dieses wird dadurch erzielt, dass eine Vielzahl von Leitungen 10 für das Wärmeträgermedium 11 in die Anordnung der Kapillaren 8 eingegliedert wird. Vorzugsweise werden in der Anordnung alternierend Kapillare 8 und Leitungen 10 angeordnet, damit die in den Kapillaren 8 anfallende Polymerisationswärme rasch über das Wärmeträgermedium 11 abgeführt werden kann. Die Leitungen 10 und Kapillare 8 können auch sandwichartig angeordnet sein. Abhängig von der erforderlichen Wärmetransportleistung werden die Leitungen dimensioniert. Es ist angestrebt, die Leitungen 10 in derselben Größenordnung (Äquivalentdurchmesser 1 bis 10 mm) anzulegen wie die Kapillaren 8. Der genaue Querschnitt der Leitungen hängt von der Wärmekapazität des Wärmeträgermediums 11, dessen Temperatur und dessen Fließgeschwindigkeit ab.

Wenn die Leitungen etwa so groß sind wie die Kapillaren, können sie auch gleichmäßig innerhalb der Anordnung verteilt werden, was die Wärmeabfuhr verbessert. Im Ergebnis wird der erste Reaktor vollständig einen mikrostrukturierten Aufbau aufweisen, sowohl die Kapillare, als auch die Leitungen betreffend. Die Herstellung mikrostrukturierter Apparate in Metall ist mittels additiver Fertigungsmethoden möglich, wie etwa durch selektives Laserschmelzen (Selective Laser Melting). Vorteilhaft kann eine Beschichtung der metallischen Kapillare an der Innenseite sein, etwa mit Tetrafluorethylen-Hexafluorpropylen-Copolymer (FEP) und/oder mit Keramik.

Wenn die Dispersion aus dem ersten Reaktor 8 wieder austritt, ist die Polymerisation im Wesentlich erfolgt.

Die Dispersion 6 enthält dann feste Primärpartikel 12, die in dem Dispersionsmittel 3 suspendiert sind. Da weder das Tensid 4, noch der Pickering-Emulgator 5 an der Reaktion teilnehmen, sind diese Stoffe auch nach der Polymerisation noch in dem Dispersionsmittel 3 enthalten.

Bei den Primärpartikeln 12 handelt es sich um eine Vorstufe des späteren Polymers. Die Primärpartikel 12 entstehen durch Polymerisation der Monomer-Tropfen innerhalb der Dispersion 3 und weisen daher im Wesentlichen die Größe und Gestalt der Monomer-Tropfen auf. Da die Größe der Primärpartikel 12 noch nicht dem gewünschten Endwert entspricht, werden die Primärpartikel 12 nun in einem zweiten Verfahrensschritt einer Agglomeration unterworfen. Die Agglomeration erfolgt in einem speziell dafür vorgesehenen zweiten Reaktor 13.

Der zweite Reaktor 13 ist stromabwärts hinter dem ersten Reaktor 8 angeordnet. Vorzugsweise ist er unmittelbar stromabwärts hinter dem ersten Reaktor 8 angeordnet. Sollten vor der Agglomeration weitere chemische Verfahrensschritte erforderlich sein, ist es auch denkbar, zwischen dem ersten Reaktor 8 und dem zweiten Reaktor 13 einen Zwischenreaktor (nicht dargestellt) anzuordnen.

Bei dem zweiten Reaktor 13 handelt es sich um einen diskontinuierlich betriebenen (Batch-) Reaktor. Der zweite Reaktor 13 weist einen Behälter 14 auf, welcher den Reaktionsraum des zweiten Reaktors 13 bildet. Der Behälter 14 wird mit der aus dem ersten Reaktor 8 abgezogenen Dispersion 6 gefüllt. Wenn der Behälter 14 voll ist, wird ein in der Zeichnung nicht dargestellten Austauschreaktor befüllt. Auf diese Weise wechselt das Verfahren von einer kontinuierlichen Betriebsweise (Polymerisation im ersten Reaktor) in eine diskontinuierliche Betriebsweise (Agglomeration im zweiten Reaktor).

In dem Behälter 14 des zweiten Reaktors 13 erhalten die Primärpartikel 12 Zeit, um zu größeren Sekundärpartikeln 15 zu agglomerieren. Die Verweilzeit innerhalb des Behälters 14 ist so gewählt, dass die Sekundärpartikel 15 die letztendlich gewünschte Größe der fertigen Polyacrylatpartikel 1 erhalten. Gegebenenfalls kann im ersten Reaktor nicht umgesetztes Monomer im zweiten Reaktor nachpolymerisieren.

Wichtig ist, dass die Primärpartikel 12 während der Agglomeration homogen in dem Dispersionsmittel verteilt sind, damit die Partikelgrößenverteilung der Sekundärpartikel 15 auch möglichst homogen ausfällt. Dafür muss die Dispersion 6 im Behälter 14 während der Agglomeration umgerührt werden. Die Agglomeration kann bei erhöhter Temperatur durchgeführt werden. Dafür kann der zweite Reaktor 13 mit einer Heizung ausgerüstet sein.

Erforderlichenfalls können nach Abschluss der Agglomeration weitere chemischen Verfahrensschritte innerhalb des zweiten Reaktors 13 an den Sekundärpartikeln 15 durchgeführt werden. So können Polyacrylatpartikel innerhalb des zweiten Reaktors 13 einer Oberflächennachvernetzung unterzogen werden, sodass die Sekundärpartikel 15 eine Kern/Schale-Struktur erhalten, welche das Absorptionsverhalten der späteren Superabsorber positiv beeinflusst. Die Sekundärpartikel 15 können auch innerhalb der Dispersion 3 im zweiten Reaktor 13 mit etwaigen Zuschlagstoffen versehen werden. Sofern diese Verfahrensschritte Wärmebedarf haben, müsste der Behälter 14 entsprechend beheizbar oder kühlbar sein.

Nach Abschluss der Agglomeration und etwaiger weiterer in Behälter 14 durchgeführter Schritte wird die Dispersion 6 aus dem zweiten Reaktor 13 entnommen und in einen Trennapparat 16 überführt, welcher die fertigen Polyacrylatpartikel 1 aus der Dispersion 6 abtrennt.

Der Trennapparat 16 kann mechanisch arbeiten (Sieb, Schwämmen), thermisch (Evaporation des Dispersionsmittels) oder mittels Membrantechnologie. Das Trennverfahren der Wahl hängt von dem Stoffsystem ab. Im Falle von Superabsorbern kann das Dispersionsmittel verdampft werden, da die Sekundärpartikeln 15 ohnehin getrocknet werden müssen, um das im Gel enthaltende Wasser auszutreiben. Abtrennung von Wasser und Dispersionsmittel kann in einem geeigneten Trockner, z.B. in einem Sprühtrockner, gleichzeitig erfolgen.

Abhängig von der Natur von Pickering-Emulgator 5 und Tensid 4 können diese Hilfsstoffe gleichzeitig mit dem Dispersionsmittel abgetrennt werden. Alternativ werden die Hilfsstoffe in einem zweiten Trennschritt abgetrennt (nicht dargestellt).

Vorzugsweise werden Pickering-Emulgator 5 und Tensid 4 gemeinsam mit dem Dispersionsmittel 3 abgetrennt und entlang einer Rückführ-Leitung 17 rezykliert. Das Rezyklieren kann im Idealfall die Bereitstellung von Dispersionsmittel, Pickering-Emulgator und Tensid ersetzen. In der Praxis wird jedoch immer ein Teil dieser Stoffe verloren gehen, sodass entsprechend nachdosiert werden muss (nicht dargestellt).

**Rezepturen:**

Für das Ausführungsbeispiel wurden die folgenden Rezepturen bereitgestellt:

Rezeptur A wässrige, teilneutralisierte Acrylsäure-Lösung mit Vernetzer (als Monomerlösung):

| Acrylsäure (AA): | 294,5g |
| Natriumhydroxid (NaOH): | 122,4 g |
| Wasser ($H_2O$): | 560 g |
| N,N'-Methylenbisacrylamid (MBA): | 293,6 mg |

Neutralisationsgrad der Acrylsäure beträgt rund 75 %. Die Konzentration des Vernetzters MBA liegt bei 1000 ppm bezogen auf die Masse der Acrylsäure. Die Dichte der Lösung liegt bei rund 1,14 g/ Die Lösung gemäß Rezeptur A ist damit rund 4.8 molar an Arcrylsäure (rund 30 wt%).

Die Flussrate der Lösung gemäß Rezeptur A beträgt 3ml/min bzw. 3.42 g/min. Daraus ergibt sich die folgende theoretische Batch-Rezeptur für 10 Minuten Laufzeit (34.2 g Lösung Rezeptur A gesamt):

| Acrylsäure (AA): | 10,26g |
| Natriumhydroxid (NaOH): | 4,29 g |
| Wasser ($H_2O$): | 19,62 g |
| N,N'-Methylenbisacrylamid (MBA): | 0,01 g |

Rezeptur B wässrige Initiatorlösung:

| Kaliumperoxodisulfat (KPS): | 440,35 mg |
| Wasser ($H_2O$): | 42,67 g |

Die Lösung gemäß Rezeptur B ist damit ca. 38,2 milimolar an Initator (KPS).

Die Flussrate der Lösung gemäß Rezeptur B beträgt 0.15 ml/min. Daraus ergibt sich die folgende theoretische Batch-Rezeptur für 10 Minuten Laufzeit (1.5 ml Lösung Rezeptur B gesamt):

| Kaliumperoxodisulfat (KPS): | 15,5 mg |
| Wasser ($H_2O$): | 1,5 g |

Rezeptur C Kontinuierliche Phase:

| Cyclohexan (CH): | 1 l |
| Sorbitanmonolaurat (Span 20): | 1,74 g |

Die Flussrate der Lösung gemäß Rezeptur C beträgt 5 ml/min. Daraus ergibt sich die folgende theoretische Batch-Rezeptur für 10 Minuten Laufzeit (50 ml Lösung Rezeptur C gesamt):

| Cyclohexan (CH): | 50 ml |
| Sorbitanmonolaurat(Span 20): | 87 mg |

Rezeptur D Batch Phase:

| Cyclohexan (CH): | 1 l |
| Sorbitanmonolaurat (Span 20): | 1.74 g |
| Organoschichtsilicat (Tixogel VZ): | 5.5 g |

Im Batch Reaktor wurden 90 ml vorgelegt für 18 Minuten Probenahme. Daraus ergibt sich die folgende Batch-Rezeptur für 10 Minuten Laufzeit (50 ml Lösung Rezeptur D gesamt):

| | |
|---|---|
| Cyclohexan (CH): | 50 ml |
| Sorbitanmonolaurat (Span 20): | 87 mg |
| Organoschichtsilicat (Tixogel VZ): | 275 mg |

Gesamtrezeptur (vereinfacht):

Unter Berücksichtigung der jeweiligen Flussraten (A:B:C = 3:0.15:5) [ml/min] ergibt sich die folgende vereinfachte Gesamtrezeptur:

| | |
|---|---|
| Acrylsäure (AA): | 10,28g |
| Natriumhydroxid (NaOH): | 4,29 g |
| Wasser ($H_2O$): | 21,12 g |
| N,N'-Methylenbisacrylamid (MBA): | 0,01 g |
| Kaliumperoxodisulfat (KPS): | 15,5 mg |
| Cyclohexan (CH): | 77,9 g (100 ml) |
| Sorbitanmonolaurat (Span 20): | 174 mg |
| Organoschichtsilicat (Tixogel VZ): | 275 mg |

Die Stoffmenge an Initiator bezogen auf die Stoffmenge Acrylsäure betrug mithin rund 400 ppm. Der Gewichtsanteil an Vernetzer bezogen auf die Gesamtmasse Acrylsäure betrug mithin rund 1000 ppm.

**Kapillarreaktor:**

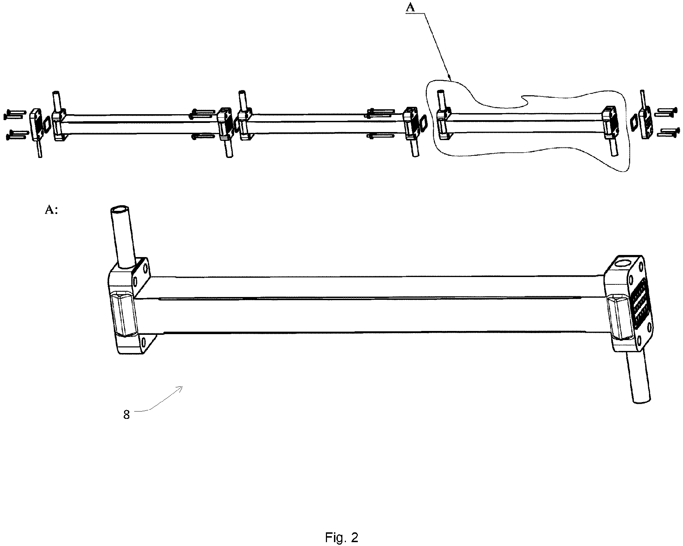

Die Figur 2 zeigt die Umsetzung des Reaktorkonzepts in eine detaillierte technische Konstruktion. Der Kapillarreaktor besteht aus drei Einzelmodulen. Die Module beinhalten je drei Lagen von je sechs Reaktionskanälen mit einem Kanalquerschnitt von 2 mm x 2 mm und einer Länge von 20 cm. Das Gesamtreaktionsvolumen pro Modul beträgt rund 14,4 cm$^3$. Die drei Lagen von Kapillaren sind von vier Lagen von Leitungen für das Wärmeträgermedium (7 x 1 mm x 2 mm) umgeben. Die Realisierung erfolgte in Edelstahl als Material unter Nutzung eines additiven Fertigungsverfahren (Selective Laser Melting - SLM).

Im Kapillarreaktor werden Polyacrylsäure-Partikel hergestellt. Diese können potentiell an der Kapillarwand anhaften und somit langfristig die Kapillare verschließen. Eine Möglichkeit dieser Anhaftung entgegenzuwirken ist eine Beschichtung der Kapillare mit einem Material, an dem die Adhäsion der Polyacrylsäurepartikel verringert ist. Um Abhilfe zu leisten wurden Einkanalteststücke mittels SLM-realisiert und dann beschichtet. Zum einen erfolgte die Beschichtung mit FEP (Tetrafluorethylen-Hexafluorpropylen-Copolymer) und zum andern mit Keramik. Die Teststücke wurden nach der Beschichtung aufgefräst und die Qualität der Beschichtung mittels Mikroskops überprüft. Beide Beschichtungen waren optisch einwandfrei.

**Versuchsaufbau:**

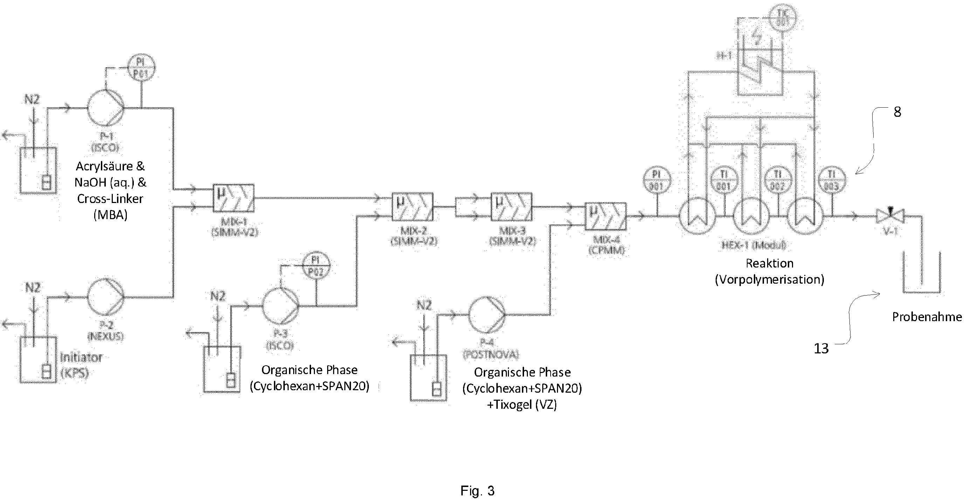

Figur 3 zeigt ein Verfahrensfließbild des verwendeten Versuchsaufbaus.

Die wässrige teilneutralisierte Acrylsäure versetzt mit dem Cross-Linker MBA (Rezeptur A) wird zunächst mit der Initiatorlösung (Rezeptur B) in einem Mikromischer des Typs Interdigitalmischer SIMM-V2 bei Raumtemperatur vermischt. Diese Reaktionslösung wird dann über die Abfolge zweier Interdigitalmischer (SIMM-V2) in der organischen Phase (Cyclohexan/Span20 - Rezeptur C) dispergiert. Danach erfolgt das Zumischen von in Cychlohexan/Span20 suspendiertem Tixogel VZ (Rezeptur D) über einen etwas gröber strukturierten Mikromischer (Raupenmischer mit 600 μm x 600 μm Kanalquerschnitt, CPMM-R600/12). Der verwendete Raupenmischer hat eine deutlich größere Strukturgröße als die zur Dispergierung eingesetzten Interdigitalmischer. Damit sollte der Raupenmischer zu keiner Veränderung der Tropfengröße der Dispersion führen.

Als Reaktor konnte wahlweise eine einzelne 1/8" Kapillare aus FEP mit 20m Länge oder ein Kapillarreaktor 8 verwendet werden, der ein Bündel von einzelnen Kapillaren aufweist. Die Aufbauvariante mit der einzelnen Kapillare ist in Figur 3 nicht dargestellt. Der Kapillarreaktor 8 war ausgeführt wie im Abschnitt zuvor beschrieben. Der zweite Reaktor 13 (Batch) war als Dreihalskolben mit einem Volumen von 250ml ausgeführt. Der zweite Reaktor konnte mit Hilfe eines Ölbads temperiert und mittels KPG® - Rührer gerührt werden.

Zum Abtrennen der Polyacrylatpartikel aus dem Dispersionsmedium und zum Austreiben des Wassers aus den Polyacrylatpartikeln standen ein Rotationstrockner und ein Sprühtrockner zur Verfügung.

**Versuchsablauf:**

Mit der Laboranlage waren drei Arten der Prozessierweise möglich:

• Halb-kontinuierliche Vorpolymerisation ohne Kapillare: Nur die Mischung der teilneutralisierten Acrylsäurelösung mit dem Initiator und das Dispergieren dieser Mischung erfolgt kontinuierlich. Danach wird die Dispersion direkt im beheizten Kolben aufgefangen, in dem eine der Probenahmedauer entsprechende Menge an Cyclohexan/Span20/Tixogel VZ vorliegt.

• Halb-kontinuierliche Vorpolymerisation mit Kapillare. Entspricht der obigen Variante mit dem Unterschied, dass die erzeugte Dispersion durch eine beheizte Kapillare geleitet wird, bevor die Probenahme im Kolben beginnt.

• Kontinuierliche Vorpolymerisation: Im Unterschied zur vorigen Variante wird nun nach der Dispergierung auch die Cyclohexan/Span20/Tixogel-Lösung kontinuierlich zugemischt bevor die weitere Prozessierung in der beheizten Kapillare erfolgt.

Die Flussratenverhältnisse für den kontinuierlichen Fall betrugen: Teilneutralisierte AA/MBA: Initiator: Cyclohexan/Span20 : Cyclohexan/Span20/Tixogel [ml/min] 3,0 : 0,3 : 5,0 : 5,0 (dies entspricht etwa 1200 ppm Initiator und 1000 ppm Crosslinker).
In den halbkontinuierlichen Varianten fällt die konti-Förderung Cyclohexan/Span20/Tixogel weg. Die entsprechende Menge wird im Batch-Kolben vorgelegt.
Im Rahmen von Vorversuchen wurde zunächst eine einzelne Kapillare anstelle eines Kapillarbündes verwendet. Die Kapillarlänge betrug 20 m, der Durchmesser 1/8". Daraus ergab sich ein Reaktionsvolumen von Vi = 39,2 ml. Daraus ergeben sich folgende Verweilzeiten im Konti-Teil des Prozesses: halb-kontinuierliche Vorpolymerisation ohne Kapillare: 0 Minuten /halb-kontinuierliche Vorpolymerisation mit Kapillare: 4,7 Minuten / kontinuierliche Vorpolymerisation: 2,9 Minuten. Betrieb der Kapillare bei 70 °C.
Probenahme im 250 ml Dreihalskolben über 18 Minuten bei 85 °C Ölbadtemperatur. Dabei Rühren mittels KPG-Rührer.
Nachrühren bei 85 °C für rund ½ h. Danach Umbau von KPG®-Rührung auf Magnetrührer/Rührfisch und Weiterrühren bei Raumtemperatur für rund 3-4 h. Danach Abfiltrieren der Partikelmasse. Trocknen an Luft über Nacht. Weitertrocknung am Rotationsverdampfer für zuletzt rund ½ bis 1 Stunde bei 50 °C. Insbesondere bei diesen Parametern Variationen von Versuch zu Versuch bzw. Probe zu Probe möglich.
Beurteilung der Probenqualität durch Mikroskopbilder der rotations-getrockneten Proben und Mikroskopbilder der völlig in Wasser gequollenen Partikel.
Im Versuch PL058 wurden so für alle drei Prozessierweisen Proben generiert (PL058A, PL058B, PL058C). In allen Fällen entstanden Partikel bzw. ein bei Ausschalten der Rührung schnell sedimentierender Partikelbrei, der sich resuspendieren ließ. Erste Partikel konnten ab ca. 10 Minuten nach Beginn der Probenahme beobachtet werden. Es handelte sich um Agglomerate, die aus kleineren Primärpartikeln zusammengesetzt waren. Nach dem Trocknen waren die Partikel in der Lage, in Wasser zu quellen.
Das rotationsgetrocknete Probenmaterial der Versuche PL058A (34 g, davon max. 22 g Acrylat), PL058B (33 g, davon max. 22 g Acrylat) und PL058C (30 g, davon max. 22 g Acrylat) wurden einer weiteren Probencharakterisierung/-analytik unterzogen.
Sodann wurde das Verfahrens mit direkter Sprühtrocknung gekoppelt mit dem Ziel, die generierte Polymerpartikelsuspension mittels Sprühtrocknung direkt weiter zu prozessieren.
Die Polymerisation wurde weitgehend unter den standardisierten Bedingungen für die halbkontinuierliche Vorpolymerisation mit Kapillare durchgeführt (natürlich ohne die Schritte Filtration und Trocknung). Die Zusammensetzung der eingesetzten Lösungen entspricht den oben angegebenen Rezepturen.
Die Flussraten betrugen: teilneutralisierte AA/MBA (Rezeptur A): Initiator (Rezeptur B): Cyclohexan/Span20 (Rezeptur C) [ml/min] 3,0 : 0,15 : 5,0. Die Verweilzeit der Dispersion in der Kapillare lag damit bei rund 4,8 Minuten. Die Initiatorkonzentration lag damit bei rund 400 ppm bezogen auf die molare Menge Acrylsäure und die Cross-Linker-Konzentration bei rund 1000 pm bezogen auf die Masse Acrylsäure. Aus der am Ende bei Raumtemperatur gerührten Partikelsuspension wurden schrittweise Material entnommen (typischerweise rund 50 ml) und dann noch mal mit gleichen Menge an Cyclohexan/Span20/Tixogel (Rezeptur D) versetzt, um die Proben für die Sprühtrocknung zu verdünnen. Damit sollte eine Agglomeration der Partikel vermieden und die Förderfähigkeit durch eine Pumpe in den Sprühtrockner verbessert werden. Zur Sprühtrocknung von einem Batch wurde ca. 45 - 60 Minuten benötigt.
Insgesamt wurden sieben Batches durchgeführt. Nachdem erstes Material vorlag, erfolgte die Sprühtrocknung begleitend zur Durchführung der Batches, sodass das Material schrittweise zeitnah weiterverarbeitet wurde.

Die Sprühtrocknung lieferte prinzipiell zwei Fraktionen: eine sehr feine Fraktion und eine grobe Fraktion (Hauptmasse). Die vereinigten Grobfraktionen aus der Aufarbeitung aller sieben Batches wurden zu einer Probe (Materialprobe PL075 Sprühgetrocknet) vereinigt, um damit Charakterisierungen/ Analytik durchzuführen.

Abgesehen von der Sprühtrocknung ähnelt die Probe im Herstellungsverfahren der Materialprobe PL58B am ehesten. Die Konsistenz von PL075 ist weitgehend pulvrig mit kleinen Agglomeraten und rieselfähig.

Anknüpfend an die Sprühtrocknungsversuche wurde eine weitere Großprobe generiert als Vergleich, um den Effekt des Aufbereitungsverfahrens zu bestimmen. Die Prozessierung entspricht der bei den Sprühtrocknungsversuchen bis zur Stelle der Generierung der Polymerpartikelsuspension im Batch. Anstelle der weiteren Verdünnung der Suspension und Sprühtrocknung, folgte die "Standardaufarbeitung" Abfiltration, Lufttrocknung und Nachtrocknung am Rotationsverdampfer (Wasserbadtemperatur bis 95 °C, Membranpumpenvakuum, bis 90 Minuten, bis runter auf 30 mbar). Es wurden wieder mehrere Batches durchgeführt (unter Beibehaltung der Versuchsbedinungen). Nach dem Trocknen liegt das Material in größeren Agglomeraten/Brocken vor. In geringer Menge finden sich auch einzelne Partikel.

Auf diese Weise konnte eine recht zuverlässige Methode zur Generierung der Polymerpartikelsuspension fixiert werden. Nun gingen die Anstrengungen dahin, den Prozess wieder völlig kontinuierlich für den Vorpolymerisationsteil zu gestalten, d.h. die Zudosierung des Tixogels kontinuierlich vorzunehmen. Parallel dazu wurde auch eine systematische Variation der Temperatur der Kapillare vorgenommen (70 °C, 80 °C, 85 °C und 95 °C). Ziel der Temperaturerhöhung dabei war, den Umsatzgrad in der Kapillare zu erhöhen.

Mit Zunahme der Temperatur beobachtet man einen Trend zu kleineren Partikeln. Im Rahmen der Versuche ergab sich auch die Einsicht, dass auch die Zubereitung und das Alter der Tixogelsuspension eine Rolle beim Versuchsergebnis spielen kann - insbesondere im Hinblick auf die generelle Qualität der generierten Polymermasse.

Deshalb wurde auch die Zubereitung des Tixogels modifiziert und standardisiert. Die Bereitung der Tixogelsuspension erfolgt nun folgendermaßen:

500 ml Cyclohexan werden mit 0,87 g Span20 versetzt und für 5 Minuten gerührt (500 rpm). Es folgt die Zugabe von 2,75 g Tixogel und erneutes Rühren für 5 Minuten. Dem schließt sich nun eine Behandlung von 2 min mittels IKA Disperigergerät Ultraturrax (15000 rpm). Noch Zugabe von 0,825 g Wasser wird erneut mittels Ultraturrax behandelt für 1 min. Danach wird unter Rühren (500 rpm) Stickstoff durch die Lösung geblubbert. Förderung und Aufbewahrung erfolgt unter Weiterrühren. Schon die letzten Versuche mit den Temperaturerhöhungen erfolgten im Hinblick auf eine spätere Überführung des Prozesses in den spezifischen Kapillarreaktor.

Angestrebt war möglichst viel Umsatz im Konti-Teil des Prozesses zu erreichen bzw. mit einer hohen Strömungsgeschwindigkeit durch den Reaktor fahren zu können und dennoch signifikanten Umsatz zu haben. Bei zu niedrigen Geschwindigkeiten besteht die Gefahr von Phasentrennung, Sedimentation bzw. von Ablagerungen.

Die bisherige 1/8" Kapillare hat eine Länge von 20 m und ein Innenvolumen von 39,2 ml. Der Reaktor beim Einsatz aller drei Module nur 60 cm Kanallänge bei parallelem Durchströmen aller 18 Kanäle bzw. von 1,80 m beim Durchströmen von jeweils nur 6 Kanälen und zweifacher Umlenkung der Fluidströme im Reaktor.

Da zuletzt die Temperatur bis auf 95 °C erhöht wurde, ging der nächste Versuch in Richtung Kürzung der eingesetzten Kapillare (auf 10 m und nur noch 19,6 ml Innenvolumen). Weiterhin wurde versucht den Umsatz in der Kapillare durch Erhöhung der Initiatormenge zu erhöhen. Dazu wurde bei gleicher Initiatorlösungskonzentration die Flussrate von 0,15 ml/min über 0,3 ml/min bis auf 0,6 ml/min erhöht.

Tendenziell werden die generierten Proben mit verkürzter Verweilzeit und erhöhter Intitatorkonzentration etwas klebriger. Für 0,15 ml/min und 0,30 ml/min Initiatorlösung sind die erhaltenen Proben aber noch relativ gut. Nur im Fall 0,60 ml/min Initiatorlösung wird die Probe zu inhomogen.

Die Inhomogenität der Probe mit 0,60 ml/min zeigt sich bereits im Zustand nach dem Abfiltrieren und dann auch im getrockneten und im gequollenen Zustand.

Als weiterer Schritt im Hinblick auf die Überführung des Verfahrens in den Polymerisationsreaktor wurde die 1/8" FEP-Kapillare (zuletzt 10 m, 19,8 ml Innenvolumen) durch einen Satz aus 1/8" Edelstahlkapillaren ersetzt (di = 2,3 mm, Vi,ges = 15,2 ml, lges = ca. 8 m). Das innere Volumen entspricht damit in etwa der eines Reaktormoduls. Im Wesentlichen sollte geprüft werden, ob es zu einer sehr schnellen Verstopfung der Kapillare kommt beim Wechsel von FEP zu Edelstahl als Oberflächenmaterial.

Es wurden zwei Versuche durchgeführt: einmal bei 90 °C und 0,30 ml/min Initiatorlösung und einmal bei 95 °C und ebenfalls 0,30 ml/min Initiatorlösung. Die Prozessierung in der Kapillare lief stabil und ließ sich damit sehr gut regulieren. Verstopfungserscheinungen wurden während der Prozessierung nicht beobachtet. Das erhaltene Polymermaterial zeigt zu den bisherigen Proben vergleichbare Eigenschaften.

Mit diesen vorbereitenden Versuchen war nun der Schritt zur Überführung in den Polymerisationsreaktor vorbereitet.

Die oben beschriebenen Reaktionsmodule erlauben zum einen den parallelen Betrieb aller 18 Kanäle oder die parallele Durchströmung einer Lage von 6 Kanälen gefolgt von einer zweimaligen Umlenkung. Zunächst wurde erst ein Reaktormodul eingesetzt, bei dem alle 18 Kanäle durchströmt wurden.

Bei der Versuchsdurchführung lief der externe Thermostat zur Versorgung des Heizkreislaufs bei 78 °C. Angestrebt wurde eine Reaktionstemperatur von ca. 75 °C. Die über die drei in die Reaktionskanäle eingebrachten Thermoelemente gemessenen Temperaturen lagen zum einen nahe an diesem Wert (rund 76 °C) und zum anderen untereinander auch sehr nahe beieinander (76,1 °C, 76,4 °C und 76,0 °C), was das gute Wärmemanagement des Reaktionsmoduls unterstreicht. Es wurden zwei Versuchsläufe bei dieser Temperatur durchgeführt: einmal mit 0,30 ml/min und einmal mit 0,60 ml/min Initiatorflussrate. In beiden Fällen konnten Partikel erhalten werden. Verstopfung/Blockade des Reaktionsmoduls während der Versuchsdurchführung wurde nicht beobachtet.

Die Überführung des Prozesses in den Polymerisationsreaktor wurde erweitert durch den Einsatz aller drei hintereinandergeschalteten Reaktionsmodule. Die bisherigen Prozessparameter wurden beibehalten. Damit verdreifacht sich die Verweilzeit im Polymerisationreaktor auf 3,3 Minuten. Erneut wurde kein Verstopfen des Reaktors während der Versuchsdurchführung beobachtet. Die Partikelproben wurden im Vakuumtrockenschrank getrocknet.

Insgesamt wurden vier Versuchsreihen gefahren, die die folgenden unterschiedlichen Prozessbedingungen abbilden:

- Kontinuierliche Vorpolymerisation in Kapillare mit 20 m Länge, 70 °C
- Kontinuierliche Vorpolymerisation in Kapillare mit 20 m Länge, 85 °C
- Kontinuierliche Vorpolymerisation in Polymerisationsreaktor bestehend aus drei Modulen, 70 °C
- Kontinuierliche Vorpolymerisation in Polymerisationsreaktor bestehend aus drei Modulen, 85 °C

**Bezugszeichenliste:**

| | |
|---|---|
| 1 | Polyacrylatpartikel |
| 2 | Monomer |
| 3 | Dispersionsmittel |
| 4 | Tensid |
| 5 | Pickering-Emulgator |
| 6 | Dispersion |
| 7 | Mischer |
| 8 | erster Reaktor (Kapillarreaktor) |
| 9 | Kapillaren |
| 10 | Leitungen |
| 11 | Wärmeträgermedium |
| 12 | Primärpartikel |
| 13 | zweiter Reaktor |
| 14 | Behälter |
| 15 | Sekundärpartikel |
| 16 | Trennapparat |
| 17 | Rückführ-Leitung |

**Patentansprüche**

1. Verfahren zur Herstellung von Polyacrylatpartikeln im Wege der Suspensionspolymerisation und Agglomeration mit den folgenden Schritten:

   a) Bereitstellen von einer Monomerlösung, welche zumindest die folgenden Komponenten aufweist:

   - Acrylsäure, die zumindest teilweise neutralisiert sein kann;
   - mindestens einen Vernetzer;
   - mindestens einen Initiator oder einen Teil eines Initiatorsystems;
   - Wasser;

   b) Bereitstellen eines organischen Dispersionsmittels, bei welchem es sich um einen aliphatischen Kohlenwasserstoff oder um ein Gemisch, welches einen aliphatischen Kohlenwasserstoff enthält, handelt;
   c) Bereitstellen von mindestens einem Tensid;
   d) Bereitstellen von mindestens einem Pickering-Emulgator;

e) Herstellen einer Dispersion durch Dispergieren der Monomerlösung in dem Dispersionsmittel;

f) Polymerisieren der Acrylsäure innerhalb des Dispersionsmittels in Gegenwart des Tensids, wodurch primäre Polyacrylatpartikel erhalten werden, welche in dem Dispersionsmittel suspendiert sind;

g) Agglomerieren der primären Polyacrylatpartikel innerhalb des Dispersionsmittels und in Gegenwart des Pickering-Emulgators unter Erhalt von sekundären Polyacrylatpartikeln;

h) Abtrennen der sekundären Polyacrylatpartikel aus dem Dispersionsmittel;

**dadurch gekennzeichnet,**

i) dass das Polymerisieren zumindest teilweise in einem kontinuierlich betriebenen, ersten Reaktor erfolgt, welcher eine Vielzahl von parallel ausgerichteten Kapillaren aufweist, wobei das Innere der Kapillaren den Reaktionsraum des Reaktors bilden und wobei der erste Reaktor mindestens eine Leitung aufweist, die sich entlang der Kapillaren erstreckt und welche von einem Wärmeträgermedium durchflossen wird;

k) und dass das Agglomerieren zumindest teilweise in einem diskontinuierlich betriebenen, zweiten Reaktor erfolgt, welcher mindestens einen Behälter aufweist, wobei das Innere des Behälters den Reaktionsraum des zweiten Reaktors bildet.

2. Verfahren nach Anspruch 1, **dadurch gekennzeichnet, dass** sowohl das Tensid, als auch der Pickering-Emulgator in dem Dispersionsmittel bereitgestellt werden, dergestalt, dass das Herstellen der Dispersion und das Polymerisieren des Monomers in Gegenwart des Tensids und des Pickering-Emulgators erfolgen.

3. Verfahren nach Anspruch 2, **dadurch gekennzeichnet, dass** Tensid und Pickering-Emulgator getrennt bereitgestellt werden, nämlich in einem ersten Ansatz enthaltend das Dispersionsmittel und das Tensid und in einem zweiten Ansatz enthaltend das Dispersionsmittel und den Pickering-Emulgator, und dass das Herstellen der Dispersion in zwei Schritten erfolgt, nämlich mit einem ersten Schritt, bei dem das Monomer mit dem ersten Ansatz vermischt wird und mit einem zweiten Schritt, bei dem das Gemisch aus erstem Ansatz und Monomer mit dem zweiten Ansatz vermischt wird.

4. Verfahren nach Anspruch 3, **dadurch gekennzeichnet, dass** der zweite Schritt, bei dem das Gemisch aus erstem Ansatz und Monomer mit dem zweiten Ansatz vermischt wird, in mindestens einem zweiten mikrostrukturierten Mischer, insbesondere in einem Raupenmischer erfolgt.

5. Verfahren nach Anspruch 3 oder 4, **dadurch gekennzeichnet, dass** der erste Schritt, bei dem das Monomer mit dem ersten Ansatz vermischt wird, in mindestens einem ersten mikrostrukturierten Mischer erfolgt, wobei die Bauweise des ersten mikrostrukturierten Mischer ausgewählt ist aus der Gruppe bestehend aus Interdigitalmischer und Raupenmischer.

6. Verfahren nach Anspruch 1, **dadurch gekennzeichnet, dass** das Tensid in dem Dispersionsmittel bereitgestellt wird, und dass der Pickering-Emulgator erst zu Beginn der Agglomeration hinzudosiert wird, dergestalt, dass das Herstellen der Dispersion und die Polymerisation in Gegenwart des Tensids und in Abwesenheit des Pickering-Emulgators erfolgen.

7. Verfahren nach einem der Ansprüche 1 bis 6, **dadurch gekennzeichnet, dass** die nach DIN EN ISO 175 (Ausgabedatum 2011-03-01) bei einer Prüftemperatur von 70°C und einer Prüfdauer von 1h bestimmte prozentuale Änderung der Masse der Polyacrylatpartikel bei Eintauchen in das Dispersionsmittel kleiner ist als 100.

8. Verfahren nach einem der Ansprüche 1 bis 7, **dadurch gekennzeichnet, dass** es sich bei dem Tensid um ein Sorbitanfettsäureester handelt.

9. Verfahren nach einem der Ansprüche 1 bis 8, **dadurch gekennzeichnet, dass** es sich bei dem Pickering-Emulgator um ein Organoschichtsilicat handelt.

10. Verfahren nach einem der Ansprüche 1 bis 9, wobei jede Kapillare eine Länge L und einen Äquivalentdurchmesser d aufweist, **dadurch gekennzeichnet, dass** das Verhältnis $L/d$ jeder Kapillare zwischen 50 und 500 beträgt.

11. Verfahren nach Anspruch 10, wobei der Äquivalentdurchmesser der Kapillaren zwischen 1 mm und 10 mm beträgt.

12. Verfahren nach einem der Ansprüche 1 bis 11, **dadurch gekennzeichnet, dass** der erste Reaktor eine Vielzahl von Leitungen aufweist, welche sich entlang der Kapillaren erstrecken und durch welche das Wärmeträgermedium fließt, dergestalt, dass die Leitungen für das Wärmeträgermedium und die Kapillaren gemeinsam eine Parallelanordnung bilden.

**13.** Verfahren nach den Ansprüchen 1 bis 12, **dadurch gekennzeichnet, dass** die Monomerlösung die folgenden Komponenten aufweist:

- Acrylsäure;
- 33 Gew.-% bis 50 Gew.-% Natriumhydroxid, bezogen auf die Einwaage der Acrylsäure;
- 164 Gew.-% bis 247 Gew.-% Wasser, bezogen auf die Einwaage der Acrylsäure;
- 778 Gew.-ppm bis 1167 Gew.-ppm N,N'-Methylenbisacrylamid als Vernetzer, bezogen auf die Einwaage der Acrylsäure;
- 1206 Gew.-ppm bis 1809 Gew.-ppm Kaliumperoxodisulphat als Initiator, bezogen auf die Einwaage der Acrylsäure;

dass als Dispersionsmittel Cyclohexan verwendet wird,

- wobei die Menge an eingesetztem Cyclohexan 606 Gew.-% bis 909 Gew.-% beträgt, bezogen auf die Einwaage der Acrylsäure;

dass als Tensid ein Sorbitanfettsäureester verwendet wird,

- wobei die Menge an eingesetztem Sorbitanfettsäureester 1 Gew.-% bis 2 Gew.-% beträgt, bezogen auf die Einwaage der Acrylsäure;

und dass als Pickering-Emulgator ein Schichtsilikat verwendet wird,

- wobei die Menge an eingesetztem Schichtsilikat 2 Gew.-% bis 3 Gew.-% beträgt, bezogen auf die Einwaage der Acrylsäure.

**14.** Verfahren nach Anspruch 13, **dadurch gekennzeichnet, dass** die Monomerlösung wie folgt bereitgestellt wird:

a) Bereitstellen von Acrylsäure;
b) Bereitstellen von wässrigem Natriumhydroxid;
c) Bereitstellen von Methylenbiacrylamid;
d) Bereitstellen einer wässrigen Lösung enthaltend Kaliumperoxodisulphat;
e) Vermischen von Acrylsäure, wässrigem Natriumhydroxid und Methylenbiacrylamid unter Erhalt von neutralisierter Acrylsäure;
f) Vermischen der neutralisierten Acrylsäure mit der wässrigen Lösung enthaltend Kaliumperoxodisulphat in mindestens einem Interdigitalmischer.

**15.** Verfahren nach einem der Ansprüche 1 bis 14, **dadurch gekennzeichnet, dass** die aus dem Dispersionsmittel abgetrennten, sekundären Polyacrylatpartikel getrocknet werden, wobei der $D_{50}$-Wert der gemäß ISO 17190-3 (Ausgabe 2001-12-01) bestimmten Partikelgrößenverteilung der getrockneten sekundären Polyacrylatpartikel zwischen 200 $\mu$m und 600 $\mu$m beträgt, unter der Maßgabe, dass weder die abgetrennten Sekundärpartikel, noch die getrockneten sekundären Polyacrylatpartikel einer Mahlung und/oder einer Klassierung unterworfen werden.

Fig. 1

A

A:

8

Fig. 2

Fig. 3

| | Europäisches Patentamt European Patent Office Office européen des brevets | **EUROPÄISCHER RECHERCHENBERICHT** | **Nummer der Anmeldung** **EP 21 17 8671** |
|---|---|---|---|

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y,D | WO 2016/087262 A1 (BASF SE [DE]) 9. Juni 2016 (2016-06-09) * Zusammenfassung * * Seite 1, Zeilen 6-10 * * Seite 2, Zeile 6 – Seite 3, Zeile 6 * * Seite 3, Zeilen 25-36 * * Seite 4, Zeilen 26-38 * * Seite 6, Zeile 19 – Seite 7, Zeile 2 * * Seite 7, Zeilen 12-31 * * Seite 8, Zeilen 30-39 * * Ansprüche; Beispiel 6 * ----- | 1-15 | INV. B01J19/00 B01J19/18 C08F2/01 C08F2/32 C08F2/00 C08F2/18 C08F2/30 C08F4/30 C08F120/06 |
| Y | WO 2009/133186 A1 (BASF SE [DE]; MATTMANN WOLFGANG [DE] ET AL.) 5. November 2009 (2009-11-05) * Zusammenfassung * * Seite 5, Zeilen 9-28 * * Seite 19, Zeilen 16-21 * * Seite 25, Zeile 32 – Seite 28, Zeile 25 * * Seite 31, Zeilen 10-25; Ansprüche; Abbildung * ----- | 1-15 | |
| Y | WO 2006/094706 A1 (NOVARTIS AG [CH]; NOVARTIS PHARMA GMBH [AT] ET AL.) 14. September 2006 (2006-09-14) * Zusammenfassung * * Seite 2, Zeilen 5-24 * * Seite 4, Zeile 21 – Seite 5, Zeile 13 * * Seite 8, Zeilen 3-29 * * Seite 9, Zeile 19 – Seite 10, Zeile 6 * * Seite 13, Zeile 4 – Seite 14, Zeile 6; Ansprüche; Abbildung 1 * ----- | 1-15 | **RECHERCHIERTE SACHGEBIETE (IPC)** B01J C08F |
| Y | JP 2015 071772 A (DAINIPPON INK & CHEMICALS) 16. April 2015 (2015-04-16) * Zusammenfassung; Abbildungen * ----- | 1-15 | |

Der vorliegende Recherchenbericht wurde für alle Patentansprüche erstellt

| Recherchenort | Abschlußdatum der Recherche | Prüfer |
|---|---|---|
| **München** | **28. September 2022** | **Nazario, Luis** |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**                EP 21 17 8671

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-09-2022

| Im Recherchenbericht angeführtes Patentdokument | Datum der Veröffentlichung | Mitglied(er) der Patentfamilie | Datum der Veröffentlichung |
|---|---|---|---|
| WO 2016087262 A1 | 09-06-2016 | CN 107207635 A | 26-09-2017 |
| | | EP 3227345 A1 | 11-10-2017 |
| | | JP 6805144 B2 | 23-12-2020 |
| | | JP 2017538008 A | 21-12-2017 |
| | | US 2017266640 A1 | 21-09-2017 |
| | | WO 2016087262 A1 | 09-06-2016 |
| WO 2009133186 A1 | 05-11-2009 | BR PI0911555 A2 | 06-03-2019 |
| | | CA 2725418 A1 | 05-11-2009 |
| | | CN 102015775 A | 13-04-2011 |
| | | EP 2274339 A1 | 19-01-2011 |
| | | ES 2558935 T3 | 09-02-2016 |
| | | JP 5623387 B2 | 12-11-2014 |
| | | JP 2011519990 A | 14-07-2011 |
| | | KR 20110021769 A | 04-03-2011 |
| | | MX 328675 B | 20-03-2015 |
| | | RU 2010149026 A | 10-06-2012 |
| | | US 2011054071 A1 | 03-03-2011 |
| | | US 2014088280 A1 | 27-03-2014 |
| | | WO 2009133186 A1 | 05-11-2009 |
| WO 2006094706 A1 | 14-09-2006 | AT 472559 T | 15-07-2010 |
| | | CN 101133086 A | 27-02-2008 |
| | | EP 1861428 A1 | 05-12-2007 |
| | | MY 141986 A | 16-08-2010 |
| | | US 2006241242 A1 | 26-10-2006 |
| | | WO 2006094706 A1 | 14-09-2006 |
| JP 2015071772 A | 16-04-2015 | JP 5875027 B2 | 02-03-2016 |
| | | JP 2015071772 A | 16-04-2015 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2016087262 A1

- EP 2993191 A1

**In der Beschreibung aufgeführte Nicht-Patentliteratur**

- **SLOMKOWSKI, S. ; ALEMÁN, J. ; GILBERT, R. et al.** Terminology of polymers and polymerization processes in dispersed systems (IUPAC Recommendations 2011). *Pure and Applied Chemistry,* 2011, vol. 83 (12), 2229-2259
- **SLOMKOWSKI, S. ; ALEMÁN, J. ; GILBERT, R. et al.** *Systeme im kolloidalen Maßstab beschränkt*
- **SLOMKOWSKI, S. ; ALEMÁN, J. ; GILBERT, R.** *Suspensions-Polymerisation in Sinne*
- **HEUSCH, R. ; REIZLEIN, K.** Disperse Systems and Dispersants in Ullmann's Encyclopedia of Industrial Chemistry. 2000

- **MARKUS FRANK.** Superabsorbents. Ullmann's Encyclopedia of Industrial Chemistry. 15. Januar 2003
- **EHRFELD, W. ; HESSEL, V. ; LÖWE, H.** Microreactors: New Technology for Modern Chemistry. Wiley-VCH Verlag GmbH, 29. April 2004
- **EHRFELD et al.** Monographie. 62f
- **EHRFELD et al.** Monographie. 64f
- **TSOTSAS, E. ; METZGER, T. ; GNIELINSKI, V. ; SCHLÜNDER, E.** Drying of Solid Materials. In Ullmann's Encyclopedia of Industrial Chemistry. 2010